(19) Europäisches Patentamt / European Patent Office / Office européen des brevets

(11) **EP 4 286 333 A1**

(12) **EUROPEAN PATENT APPLICATION**
published in accordance with Art. 153(4) EPC

(43) Date of publication:
06.12.2023 Bulletin 2023/49

(21) Application number: 22746053.2

(22) Date of filing: 28.01.2022

(51) International Patent Classification (IPC):
$C01B\ 33/157$ (2006.01)    $B01J\ 20/22$ (2006.01)
$B01J\ 20/28$ (2006.01)    $B01J\ 20/34$ (2006.01)
$C01B\ 33/152$ (2006.01)    $C02F\ 1/28$ (2023.01)

(52) Cooperative Patent Classification (CPC):
B01J 20/22; B01J 20/28; B01J 20/34;
C01B 33/152; C01B 33/157; C02F 1/28;
Y02P 10/20

(86) International application number:
PCT/JP2022/003432

(87) International publication number:
WO 2022/163834 (04.08.2022 Gazette 2022/31)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.01.2021 JP 2021013822

(71) Applicant: Mitsui Mining & Smelting Co., Ltd.
Shinagawa-ku
Tokyo 141-8584 (JP)

(72) Inventors:
• OSAKO Takao
  Ageo-shi, Saitama 362-0021 (JP)
• KATO Kazuhiko
  Ageo-shi, Saitama 362-0021 (JP)
• KOBAYASHI Yutaka
  Ageo-shi, Saitama 362-0021 (JP)

(74) Representative: Novagraaf Technologies
2 rue Sarah Bernhardt
CS90017
92665 Asnières-sur-Seine Cedex (FR)

(54) **POROUS BODY, ADSORPTIVE MATERIAL CONTAINING SAID POROUS BODY, AND METHOD FOR REMOVING METAL AND/OR METAL ION USING SAID ADSORPTIVE MATERIAL**

(57) An object of the present invention is to provide a porous body having excellent adsorption performance, an adsorbent including the porous body, and a method of removing a metal and/or a metal ion from a liquid to be treated, with the adsorbent, and, in order to achieve the object, the present invention provides a porous body having a co-continuous structure formed by: a ceramic skeleton including mesopores; and macropores, wherein a surface of the ceramic skeleton is modified by a metal- and/or metal ion-adsorbable nitrogen atom-containing group, wherein the nitrogen atom-containing group is at least one selected from a primary amino group, a secondary amino group, a tertiary amino group, a quaternary ammonium group, an imino group, a nitrilo group and a nitrogen atom-containing heterocyclic group, and wherein an amount of the nitrogen atom-containing group contained in the porous body is 1.5 mmol/g or more and 5.4 mmol/g or less.

Figure 3

**Description**

FIELD OF THE INVENTION

The present invention relates to a porous body, an adsorbent including the porous body, and a method of removing a metal and/or a metal ion with the adsorbent.

BACKGROUND ART

For example, a particulate porous silica subjected to surface treatment is known as an adsorbent for use in recovery of a metal and/or a metal ion. For example, Patent Document 1 describes a particulate porous silica having a co-continuous structure formed by: a ceramic skeleton including mesopores; and macropores.

CITATION LIST

PATENT DOCUMENT

Patent Document 1: International Publication No. WO 2017/002871

SUMMARY OF THE INVENTION

An object of the present invention is to provide a porous body having excellent adsorption performance, an adsorbent including the porous body, and a method of removing a metal and/or a metal ion from a liquid to be treated, with the adsorbent.

The present inventors have found that an adsorbent obtained by modifying a surface of a porous body having a co-continuous structure formed by: a ceramic skeleton including mesopores; and macropores, by a predetermined amount of a metal- and/or metal ion-adsorbable nitrogen atom-containing group, has more excellent adsorption performance than a conventional adsorbent (for example, mesoporous silica or ion exchange resin).

In general, as the amount of a metal- and/or metal ion-adsorbable functional group introduced onto a surface of a porous body is larger, adsorption performance is enhanced. However, the present inventors have found that, when a metal- and/or metal ion-adsorbable nitrogen atom-containing group is introduced onto a surface of a porous body having a co-continuous structure formed by: a ceramic skeleton including mesopores; and macropores, the amount of the nitrogen atom-containing group introduced, if too large, causes deterioration in adsorption performance. In a case where a solution containing a metal and/or a metal ion is in contact with an adsorbent, the "adsorption performance" in the present invention means both the adsorption rate that can be evaluated based on the amount of a metal and/or a metal ion adsorbed by the adsorbent (the percentage of the amount of a metal and/or a metal ion adsorbed by the adsorbent relative to the amount of a metal and/or a metal ion originally contained in the solution), and the adsorption speed calculated by dividing the amount of a metal and/or a metal ion adsorbed by the adsorbent by a predetermined period of time. Herein, the adsorption speed is placed ahead of the adsorption rate in the present invention from the viewpoint that the recovery speed of a substance to be adsorbed is of importance in practical use of the adsorbent.

The present inventors have completed the present invention based on these findings. In other words, the present invention encompasses the following porous body, adsorbent and method.

[A] A porous body having a co-continuous structure formed by: a ceramic skeleton including mesopores; and macropores,

wherein a surface of the ceramic skeleton is modified by a metal- and/or metal ion-adsorbable nitrogen atom-containing group,
wherein the nitrogen atom-containing group is at least one selected from a primary amino group, a secondary amino group, a tertiary amino group, a quaternary ammonium group, an imino group, a nitrilo group and a nitrogen atom-containing heterocyclic group, and
wherein an amount of the nitrogen atom-containing group contained in the porous body is 1.5 mmol/g or more and 5.4 mmol/g or less.

[B] An adsorbent including the porous body according to [A].
[C] A method of removing a metal and/or a metal ion from a solution containing the metal and/or the metal ion, the method including a step of contacting the solution and the adsorbent according to [B].

The present invention provides a porous body having excellent adsorption performance, an adsorbent including the porous body, and a method of removing a metal and/or a metal ion from a liquid to be treated, with the adsorbent.

BRIEF DESCRIPTION OF THE DRAWINGS

Figure 1 is a side view of a columnar body according to one embodiment of the present invention;
Figure 2A is a cross-sectional view for describing a process of determining an average diameter of a columnar body according to one embodiment of the present invention;
Figure 2B is a cross-sectional view for describing a process of determining an average diameter of a columnar body according to one embodiment of the present invention;
Figure 3 is an enlarged view of a region R (one portion of a surface of a columnar body according to one embodiment of the present invention) in Figure 1;
Figure 4A is a SEM image obtained by observing a structure of a surface of a silica monolith pellet obtained in Production Example 1, with a scanning electron microscope (SEM);
Figure 4B is a SEM image (at a higher magnification than that in Figure 4A) obtained by observing a structure of a surface of a silica monolith pellet obtained in Production Example 1, with a scanning electron microscope (SEM);
Figure 5 is a SEM image obtained by observing a structure of a surface of a silica monolith adsorbent obtained in Production Example 14, with a scanning electron microscope (SEM); and
Figure 6 is a schematic view of a flow-through adsorbing apparatus used in Test Example 4.

DETAILED DESCRIPTION OF THE INVENTION

< < Porous body>>

Hereinafter, the porous body of the present invention will be described.

<Form and shape of porous body>

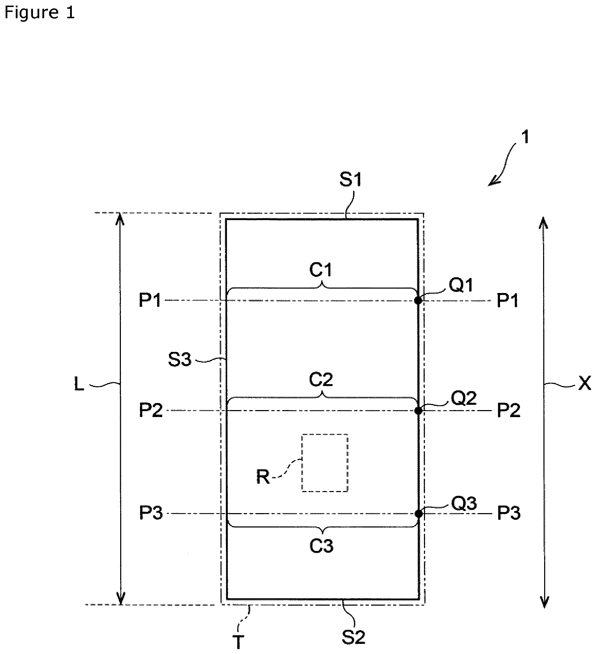

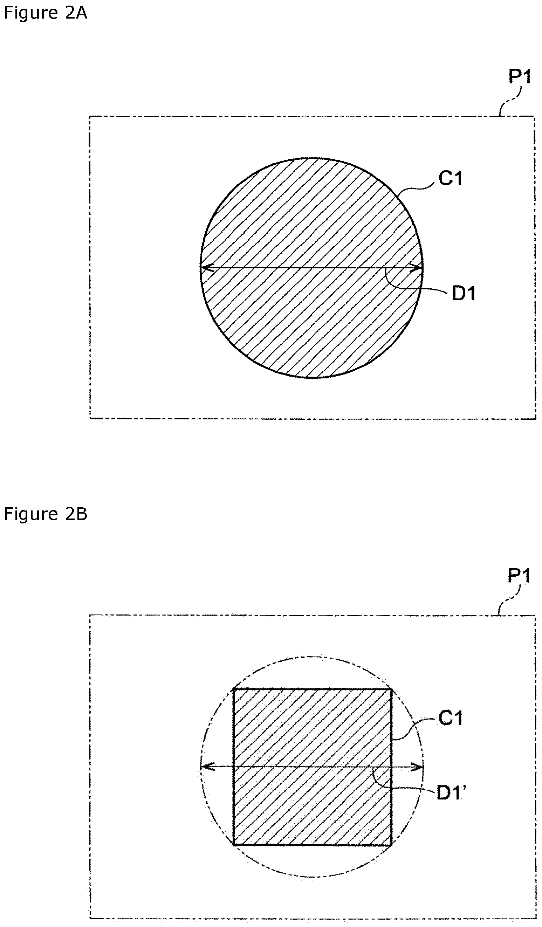

The form of the porous body is not particularly limited. Examples of the form of the porous body include a particle, an aggregate, and a shaped body. The shape of the porous body is not particularly limited. Examples of the shape of the porous body include columnar, spherical (for example, true spherical and ellipsoidal spherical), needle-like, flake-like, polyhedral, flattened, ground, and aggregated shapes.
The porous body is preferably columnar.
Hereinafter, the shape of a columnar body 1 according to one embodiment of the present invention will be described with reference to Figures 1, 2A and 2B.
As illustrated in Figure 1, the columnar body 1 has an axial direction X. The axial direction X is matched with a direction in which the columnar body 1 extends. As illustrated in Figure 1, the columnar body 1 has a first end surface S1 located at one side of the axial direction X, a second end surface S2 located at the other side of the axial direction X, and a side surface S3 located between the first end surface S1 and the second end surface S2.
While both the first end surface S1 and the second end surface S2 are flat surfaces as illustrated in Figure 1, one of or both the first end surface S1 and the second end surface S2 may be curved. While the side surface S3 is a flat surface as illustrated in Figure 1, the side surface S3 may be curved.
The columnar body 1 has, for example, a cylindrical, elliptic cylindrical, or polygonal columnar such as quadrangular columnar, hexagonal columnar, or octagonal columnar shape. The cylindrical, elliptic cylindrical, quadrangular columnar, hexagonal columnar and octagonal columnar shapes respectively mean that transverse cross-sections obtained by cutting of the columnar body 1 at flat surfaces perpendicular to the axial direction X have circular, elliptical, quadrangular, hexagonal and octagonal shapes. The columnar body 1 may have a shape where, for example, such a cylindrical, elliptic cylindrical, or polygonal columnar shape is partially cut off, and a transverse cross-section of the columnar body 1 here has a shape where, for example, a circular, elliptical, or polygonal shape is partially cut off.
A shape of a monolith adsorbent conventionally present is, for example, fine particulate as described in International Publication No. WO 2017/002871. If a particulate monolith adsorbent is packed in a column and then used, not only the back pressure of the column is easily increased during passing of a liquid to be treated, but also the amount of flow-through of such a liquid to be treated is easily decreased. Thus, in a case where an amount of such a liquid to be treated is large, it is difficult to increase the recovery speed(s) of a metal and/or a metal ion in such a liquid to be treated. One solution considered for prevention of an increase in back pressure and a decrease in amount of flow-through of such a liquid to be treated, in packing in the column, is to adopt not a particulate monolith adsorbent, but a columnar monolith adsorbent. The present inventors have found that a monolith adsorbent, when is a columnar body, can be increased in durability and is hardly broken even in repeating of flow of a liquid, depending on the size of the columnar body. Hereinafter, a preferable size of the columnar body from the viewpoint of allowing the columnar body to satisfying of both adsorption performance and durability will be described. An adsorbent having both adsorption performance and durability is particularly useful when repeatedly regenerated and used for adsorption of a metal and/or a metal ion. Such an adsorbent having both adsorption performance and durability can exhibit excellent adsorption performance even when repeatedly regenerated and used.

The average diameter of the columnar body 1 is preferably 1.5 mm or more, more preferably 2.5 mm or more, further preferably 3.0 mm or more, still further preferably 3.5 mm or more, still further preferably 4.0 mm or more, from the viewpoint of an enhancement in durability. On the other hand, the average diameter of the columnar body 1 is preferably 20 mm or less, more preferably 14 mm or less, further preferably 12 mm or less, still further preferably 10 mm or less, still further preferably 8.0 mm or less, from the viewpoint of an enhancement in adsorption performance. These upper limit values may be each combined with any of the lower limit values described above.

A process of determining the average diameter of the columnar body 1 is as follows. As illustrated in Figure 1, any three positions Q1, Q2 and Q3 (for example, Q1 is any one position at an upper portion of the columnar body 1, Q2 is any one position at a central portion of the columnar body 1, and Q3 is any one position at a lower portion of the columnar body 1) of the columnar body 1 are cut at flat surfaces P1, P2 and P3 perpendicular to the axial direction X, respectively, and sizes of three transverse cross-sections C1, C2 and C3 are determined. The average diameter of the columnar body 1 is defined as an arithmetic average value of the sizes of the three transverse cross-sections C1, C2 and C3. When the transverse cross-section C1 is circular as illustrated in Figure 2A, a diameter D1 of the transverse cross-section C1 is defined as the size of the transverse cross-section C1. When the transverse cross-section C1 has a shape other than a circular shape (for example, polygon such as an elliptical, quadrangular, hexagonal, or octagonal shape) as illustrated in Figure 2B, a diameter D1' of a circle circumscribed around the transverse cross-section C1 is defined as the size of the transverse cross-section C1. Respective processes of determining the sizes of the transverse cross-sections C2 and C3 are the same as the process of determining the size of the transverse cross-section C1. While the transverse cross-section C1 illustrated in Figure 2B is quadrangular, this is one example of a case where the transverse cross-section C1 has a shape other than a circle, and the transverse cross-section C1 may have a shape other than a quadrangle.

As illustrated in Figure 1, the columnar body 1 has a length L. The length is the dimension of the axial direction X.

A process of determining the length of the columnar body 1 is as follows. As illustrated in Figure 1, a length L of a quadrangle T circumscribed around a shape of the columnar body 1 in a side view is defined as the length of the columnar body 1. The length of the columnar body 1 is not particularly limited, and can be, for example, 1 mm or more and 500 mm or less, from the viewpoint of convenience in practical use.

The aspect ratio of the columnar body 1 is preferably 0.70 or more, more preferably 1.0 or more, further preferably 1.5 or more, from the viewpoint of an enhancement in durability. The aspect ratio of the columnar body 1 is preferably 10 or less, more preferably 7.0 or less, still further preferably 5.0 or less, still further preferably 4.0 or less, from the viewpoint of workability in use of the columnar body packed in a column or the like and from the viewpoint of prevention of deteriorated durability that can be caused in the case of a too large aspect ratio of the columnar body 1. These upper limit values may be each combined with any of the lower limit values described above.

The aspect ratio of the columnar body 1 is determined by the following formula.

$$\text{Aspect ratio of columnar body } 1 = \text{Length L of columnar body } 1/\text{Average diameter of columnar body } 1$$

<Structure of porous body before modification>

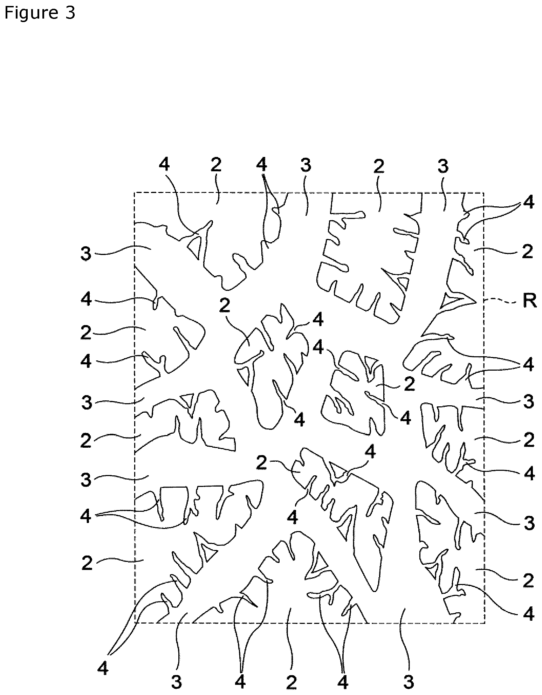

Hereinafter, a structure of a porous body before modification by a nitrogen atom-containing group will be described with reference to Figure 3. Figure 3 is a partially enlarged view of a surface of a porous body according to one embodiment of the present invention. When the porous body is the columnar body 1 illustrated in Figure 1, Figure 3 corresponds to an enlarged view of the region R in Figure 1.

As illustrated in Figure 3, the porous body has a co-continuous structure formed by: a ceramic skeleton 2 including mesopores 4; and macropores 3.

The ceramic skeleton 2 and the macropores 3 in the porous body each have a continuous three-dimensional network structure, and intertangle with each other, to thereby a co-continuous structure of the ceramic skeleton 2 and the macropores 3 is formed. The porous body having such a co-continuous structure of the ceramic skeleton 2 and the macropores 3 can be confirmed by observation of a surface or a cross section of the porous body with a scanning electron microscope (SEM).

The most frequent pore diameter of the macropores 3 is preferably 0.20 $\mu$m or more, more preferably 0.50 $\mu$m or more, still further preferably 0.80 $\mu$m or more, from the viewpoint of an enhancement in adsorption performance. The most frequent pore diameter of the macropores 3 is preferably 4.0 $\mu$m or less, more preferably 3.0 $\mu$m or less, still further preferably 2.5 $\mu$m or less, from the same viewpoint. These upper limit values may be each combined with any of the lower limit values described above.

The "most frequent pore diameter of the macropores 3" refers to a most frequent pore diameter of macropores, measured in a pore diameter range of 50 nm to 500 $\mu$m by a mercury intrusion method, as described in Examples below.

The most frequent pore diameter of the mesopores 4 is preferably 2.0 nm or more, more preferably 5.0 nm or more, still further preferably 10 nm or more, from the viewpoint of an enhancement in adsorption performance. The most frequent pore diameter of the mesopores 4 is 50 nm or less, more preferably 30 nm or less, still further preferably 25 nm or less, from the same viewpoint. These upper limit values may be each combined with any of the lower limit values described above.

The "most frequent pore diameter of the mesopores 4" refers to a most frequent pore diameter of mesopores, measured from a nitrogen adsorption-desorption isotherm by a BJH method, as described in Examples below.

The ratio of the most frequent pore diameter of the macropores 3 to the most frequent pore diameter of the mesopores 4 is preferably 15 or more, more preferably 20 or more, still further preferably 30 or more, further preferably 40 or more, from the viewpoint of an enhancement in adsorption performance. The ratio is preferably 200 or less, more preferably 150 or less, still further preferably 130 or less, further preferably 120 or less, from the same viewpoint. These upper limit values may be each combined with any of the lower limit values described above.

The specific surface area of the porous body, measured from a nitrogen adsorption-desorption isotherm by a BET method, is preferably 100 $m^2$/g or more, more preferably 120 $m^2$/g or more, still further preferably 130 $m^2$/g or more, from the viewpoint of an enhancement in adsorption performance. The upper limit of the specific surface area of the porous body is not particularly limited. A method of measuring the specific surface area from a nitrogen adsorption-desorption isotherm by a BET method is as described in Examples below.

The total pore volume of the porous body, measured by a mercury intrusion method, is preferably 1.5 mL/g or more and 4.0 mL/g or less, more preferably 1.8 mL/g or more and 3.5 mL/g or less, still further preferably 2.0 mL/g or more and 3.0 mL/g or less, from the viewpoint of an enhancement in adsorption performance. A method of measuring the total pore volume by a mercury intrusion method is as described in Examples below.

The porosity of the porous body, measured by a mercury intrusion method, is preferably 70% or more and 90% or less, more preferably 70% or more and 85% or less, still further preferably 70% or more and 80% or less, from the viewpoint of an enhancement in adsorption performance. A method of measuring the porosity by a mercury intrusion method is as described in Examples below.

<Material of porous body>

A ceramic constituting the ceramic skeleton 2 is, for example, a semimetal element- or metal element-containing oxide ceramic.

Examples of the semimetal element include silicon. Examples of a silicon-containing oxide ceramic include silica ($SiO_2$).

Examples of the metal element include aluminum, tin, cerium, transition metal elements such as titanium, zirconium, vanadium, chromium, iron, cobalt, nickel, palladium, platinum, copper, silver, gold, and zinc. Among these, aluminum, tin, cerium, titanium or zirconium is preferable from the viewpoint of production easiness of the porous body. Examples of an oxide ceramic including aluminum, tin, cerium, titanium or zirconium include alumina ($Al_2O_3$), tin oxide ($SnO_2$), ceria ($CeC_2$), titania ($TiO_2$), and zirconia ($ZrO_2$).

The oxide ceramic may further contain, in addition to a silicon or transition metal element, any element selected from alkali metal elements such as lithium and sodium, alkali earth metal elements such as magnesium and calcium, and rare earth elements such as lanthanum, scandium, yttrium, and gadolinium.

<Method of producing porous body>

The porous body can be produced by a method including, for example, the following steps of:

(a) producing a polymetalloxane gel by a sol-gel method;
(b) forming a pore in a skeleton of the polymetalloxane gel produced in step (a); and
(c) firing the polymetalloxane gel subjected to step (b), optionally after washing and/or drying the polymetalloxane gel, to thereby produce a ceramic monolith. Hereinafter, each step will be described.

Step (a)

In step (a), a polymetalloxane gel is produced by a sol-gel method.

Polymetalloxane is an inorganic polymer having a metalloxane bond as a main chain backbone. The metalloxane bond is a bond of a semimetal element or a metal element with an oxygen atom, namely, a M-O bond (wherein M represents a semimetal element or a metal element).

Examples of the semimetal element represented by M include silicon. Examples of the metal element represented by M include aluminum, and transition metal elements such as tin, cerium, titanium, zirconium, vanadium, chromium, iron, cobalt, nickel, palladium, platinum, copper, silver, gold, and zinc. Aluminum, tin, cerium, titanium or zirconium is preferable from the viewpoint of production easiness of the porous body.

The sol-gel method can be performed according to an ordinary method. One example of the sol-gel method is as follows.

The sol-gel method includes a sol producing step and a gel producing step.

In the sol producing step, a reaction solution containing a ceramic precursor, a catalyst and a macropore forming agent is stirred to thereby produce a sol.

The ceramic precursor is not particularly limited as long as it can form the polymetalloxane gel.

The ceramic precursor is, for example, a semimetal compound (for example, silicon compound) having a hydroxy group- and/or a hydrolyzable functional group, or a metal compound (for example, aluminum compound, tin compound, cerium compound, titanium compound, or zirconium compound) having a hydroxy group- and/or a hydrolyzable functional group. The total number of such a hydroxy group and such a hydrolyzable functional group in the ceramic precursor may be 1 or 2, and is preferably 3 or more, more preferably 4, from the viewpoint of production of a polymetalloxane gel having a highly crosslinked structure by a metalloxane bond (M-O bond). When the ceramic precursor has two or more hydrolyzable functional groups, the types of such two or more hydrolyzable functional groups may be the same or different.

Such a hydrolyzable functional group is a functional group to be converted into a hydroxy group by hydrolysis. Examples of such a hydrolyzable functional group include an alkoxy group, an acetoxy group, a halide group, and a hydrido group, and an alkoxy group is preferable. Such an alkoxy group is preferably an alkoxy group having 1 to 10 carbon atoms, more preferably an alkoxy group having 1 to 5 carbon atoms, much more preferably a methoxy group, an ethoxy group or a propyl group. Such an alkoxy group may be linear or branched.

The ceramic precursor may have a functional group other than the hydroxy group and the hydrolyzable functional group. Examples of the functional group other than the hydroxy group and the hydrolyzable functional group include an alkyl group, an alkenyl group, a phenyl group, a phenoxy group, a carboxyl group, an epoxy group, an aldehyde group, a thiol group, an amino group, an acryloyl group, and a methacryloyl group. The alkyl group is preferably an alkyl group having 1 to 10 carbon atoms, more preferably an alkyl group having 1 to 5 carbon atoms, much more preferably a methyl group, an ethyl group or a propyl group. The alkyl group may be linear or branched. The alkenyl group is preferably an alkenyl group having 2 to 10 carbon atoms, more preferably an alkenyl group having 2 to 5 carbon atoms, much more preferably a vinyl group. The alkenyl group may be linear or branched.

The silicon compound having a hydroxy group and/or a hydrolyzable functional group is preferably an alkoxysilane. Examples of the alkoxysilane include tetraalkoxysilane, trialkoxysilane, dialkoxysilane, and monoalkoxysilane. Among these, tetraalkoxysilane is preferable from the viewpoint of allowing a hydrolysis reaction and a polycondensation reaction to easily progress. Examples of the tetraalkoxysilane include tetramethoxysilane, and tetraethoxysilane.

The aluminum compound having a hydroxy group and/or a hydrolyzable functional group is preferably, for example, aluminum hydroxide or aluminum alkoxide.

The tin compound having a hydroxy group and/or a hydrolyzable functional group is preferably, for example, tin hydroxide or tin alkoxide.

The cerium compound having a hydroxy group and/or a hydrolyzable functional group is preferably, for example, cerium hydroxide or cerium alkoxide.

The titanium compound having a hydroxy group and/or a hydrolyzable functional group is preferably, for example, titanium alkoxide. Examples of the titanium alkoxide include titanium monoalkoxide, titanium dialkoxide, titanium trialkoxide, and titanium tetraalkoxide. Among these, titanium tetraalkoxide is preferable from the viewpoint of allowing a hydrolysis reaction and a polycondensation reaction to easily progress. Examples of the titanium tetraalkoxide include titanium tetraisopropoxide.

The zirconium compound having a hydroxy group and/or a hydrolyzable functional group is preferably zirconium alkoxide. Examples of the zirconium alkoxide include zirconium monoalkoxide, zirconium dialkoxide, zirconium trialkoxide, and zirconium tetraalkoxide. Among these, zirconium tetraalkoxide is preferable from the viewpoint of allowing a hydrolysis reaction and a polycondensation reaction to easily progress. Examples of the zirconium tetraalkoxide include zirconium tetraisopropoxide.

The ceramic precursor may be a metal salt (for example, aluminum salt, tin salt, or cerium salt) to be converted to hydroxide by hydrolysis. Examples of the aluminum salt include aluminum nitrate, aluminum sulfate, and aluminum chloride. Examples of the tin salt include tin nitrate, tin sulfate, and tin chloride. Examples of the cerium salt include cerium nitrate, cerium sulfate, and cerium chloride. Among these, aluminum chloride, tin chloride or cerium chloride is preferable from the viewpoint of allowing a hydrolysis reaction and a polycondensation reaction to easily progress.

The catalyst serves as a catalyst of a hydrolysis reaction. Examples of the catalyst include an acid and a base. Examples of the acid include inorganic acids such as hydrochloric acid, sulfuric acid and nitric acid; and organic acids such as formic acid, acetic acid, oxalic acid and citric acid. Examples of the base include sodium hydroxide, potassium hydroxide, ammonia water, sodium carbonate, sodium hydrogen carbonate, amines such as trimethylammonium, ammonium hydroxides such as tert-butylammonium hydroxide, and alkali metal alkoxides such as sodium methoxide.

The macropore forming agent contributes to formation of macropores in a ceramic monolith. Examples of the macropore forming agent include a water-soluble polymer and a surfactant. Among these, a water-soluble polymer is preferable. The water-soluble polymer induces sol-gel transition with a phase separation process (typically spinodal decomposition), and contributes to formation of a co-continuous structure of a skeleton phase and a solvent phase in a gel and thus formation of macropores in a ceramic monolith.

Examples of the water-soluble polymer include polyalkylene glycols such as polyethylene glycol and polypropylene glycol, polyacrylic acid, a polyethylene glycol-polypropylene glycol block copolymer, polyvinylpyrrolidone, a polystyrenesulfonic acid sodium salt, and polyallylamine hydrochloride.

The weight average molecular weight of the water-soluble polymer is preferably 8000 or more and 15000 or less from the viewpoint that a phase separation process (typically spinodal decomposition) is efficiently performed. The weight average molecular weight is measured by GPC (gel permeation chromatography).

Examples of the surfactant include cationic surfactants such as cetyl trimethylammonium chloride, anionic surfactants such as sodium dodecyl sulfate, and non-ionic surfactants such as polyoxyethylene alkyl ether.

When the ceramic precursor is a semimetal compound, the reaction solution may include a mesopore forming agent. The mesopore forming agent contributes to formation of mesopores in a ceramic monolith. Examples of the mesopore forming agent include a nitrogen compound. Examples of such a nitrogen compound usable as the mesopore forming agent include amide compounds such as urea, formamide, N-methylformamide, N,N-dimethylformamide, acetamide, N-methylacetamide and N,N-dimethylacetamide; and heterocyclic compounds such as hexamethylenetetramine. Among these, urea is preferable from the viewpoint of efficient mesopore formation.

The reaction solution may include one or two or more solvent. Examples of the solvent is water, an organic solvent, and a mixed solvent of water and an organic solvent. Examples of the organic solvent include alcohols such as methanol, ethanol, propanol, and butanol; and ketones such as acetone and methyl ethyl ketone. When the solvent is a mixed solvent of water and the organic solvent, the content of the organic solvent is preferably 65% by mass or less based on the mass of the mixed solvent.

The reaction solution is preferably prepared by adding the ceramic precursor to a mixed liquid containing the catalyst, the macropore forming agent and optionally the mesopore forming agent from the viewpoint of appropriate control of a reaction start point. The reaction can be started by adding the ceramic precursor to a mixed liquid containing the catalyst, the macropore forming agent and optionally the mesopore forming agent.

When the reaction solution is stirred, the reaction solution may be cooled. Such cooling of the reaction solution is performed so that, for example, the temperature of the reaction solution becomes a temperature facilitating progression of sol-gel transition along with a phase separation process (typically spinodal decomposition), preferably 60°C or less. The lower limit is around a temperature at which the reaction solution is not frozen, and is, for example, about 1°C.

For example, when tetramethoxysilane, which is a semimetal compound having a hydrolyzable functional group, is used as the ceramic precursor, the above cooling is suitably performed.

The reaction solution forms a sol according to progress of a hydrolysis reaction and a polycondensation reaction.

In the hydrolysis reaction, a hydrolyzable functional group in the ceramic precursor is hydrolyzed to thereby form a hydroxy group. In the polycondensation reaction, a metalloxane oligomer is formed by a dehydration condensation reaction between such hydroxy groups and a dealcoholization condensation reaction between such a hydroxy group and a hydrolyzable functional group not hydrolyzed. For examples, when the ceramic precursor is a silicon compound having a hydrolyzable functional group, a siloxane oligomer is formed by a dehydration condensation reaction indicated in the following formula (1) and a dealcoholization condensation reaction indicated in the following formula (2). In the following formula (2), -OR represents a hydrolyzable functional group not hydrolyzed.

$$\equiv Si\text{-}OH + HO\text{-}Si\equiv \; - > \equiv Si\text{-}O\text{-}Si\equiv + H_2O \qquad (1)$$

$$\equiv Si\text{-}OR + HO\text{-}Si\equiv \; - > \equiv Si\text{-}I\text{-}Si\equiv + ROH \qquad (2)$$

When the hydrolysis reaction and the polycondensation reaction further progress, nanometer-sized primary particles of the metalloxane oligomer are formed and such primary particles are aggregated to form secondary particles.

Thus, the reaction solution forms a sol.

In the gel producing step, optionally after a mold for shaping is added to the sol produced in the sol producing step, the sol produced in the sol producing step is heated to a gelation temperature, to thereby produce a polymetalloxane gel. In the gel producing step, a hydrolysis reaction and a polycondensation reaction further progress to thereby form a metalloxane polymer, and sol-gel transition with a phase separation process (typically spinodal decomposition) is induced to thereby produce a polymetalloxane gel (wet gel). The polymetalloxane gel produced has a co-continuous structure of a skeleton phase and a solvent phase. The skeleton phase is rich in the metalloxane polymer generated by the hydrolysis reaction and the polycondensation reaction, and the solvent phase is rich in the solvent. The skeleton phase and the solvent phase each have a continuous three-dimensional network structure, and intertangle with each other to thereby form a co-continuous structure of the skeleton phase and the solvent phase.

The mold for shaping is a mold for shaping a gel into a desired shape. Examples of the material of the mold include synthetic resins such as polystyrene, polyethylene, polypropylene, polyethylene terephthalate (PET), polycarbonate (PC), silicone and polytetrafluoroethylene (PTFE), and metals such as aluminum and stainless steel.

The gelation temperature is preferably 20°C or more and 80°C or less, more preferably 25°C or more and 40°C or less from the viewpoint of appropriately forming a co-continuous structure of a skeleton phase and a solvent phase in the gel. The heating time at the gelation temperature is preferably 4 hours or more and 24 hours or less.

Step (b)

In step (b), a pore is formed in a skeleton of the polymetalloxane gel produced in step (a).

Such formation of a pore in a skeleton of the polymetalloxane gel can be performed according to an ordinary method. When a pore is formed in a skeleton of the polymetalloxane gel, the polymetalloxane gel produced in step (a) and a mesopore forming agent may be reacted, if necessary.

The description of the mesopore forming agent is as described above. The mesopore forming agent may be contained in the polymetalloxane gel produced in step (a), may be contained in a reaction solution containing the polymetalloxane gel and the mesopore forming agent, or may be contained in both of them. In step (b), a pore (pore serving as a mesopore in ceramic monolith) is formed in a skeleton of the gel. The reaction solution may include one or two or more solvents. The description of such a solvent is as described above.

When the polymetalloxane gel and the mesopore forming agent are reacted, both may be reacted under heating and refluxing.

The heating temperature under heating and refluxing is preferably 50°C or more and 120°C or less. The heating time under heating and refluxing is preferably 1 hour or more and 36 hours or less, more preferably 4 hours or more and 24 hours or less.

When a semimetal compound having a hydrolyzable functional group is used as the ceramic precursor, the polymetalloxane gel and the mesopore forming agent are suitably reacted under heating and refluxing.

Step (c)

In step (c), the polymetalloxane gel subjected to step (b) is fired, optionally after washing and/or drying the polymetalloxane gel, to thereby produce a ceramic monolith.

Examples of the washing liquid used for washing include water, an organic solvent, a mixed solvent of water and an organic solvent, and an aqueous solution containing an acid or a base. Examples of the organic solvent include alcohols such as methyl alcohol, ethyl alcohol, n-propanol, 2-propanol (IPA) and butanol. Examples of the acid include hydrochloric acid, sulfuric acid, nitric acid, hydrofluoric acid, acetic acid, formic acid, carbonic acid, citric acid, and phosphoric acid. Examples of the base include sodium hydroxide, potassium hydroxide, ammonia, water-soluble amine, sodium carbonate, and sodium hydrogen carbonate.

Examples of the drying method include natural drying, drying by heating, drying with a solvent having low surface tension, drying by freezing and sublimation, or supercritical drying.

In the firing, the firing temperature is preferably 500°C or more and 1000°C or less and more preferably 600°C or more and 800°C or less, and the firing time is preferably 1 hour or more and 8 hours or less and more preferably 3 hours or more and 5 hours or less. The firing is usually performed under an air atmosphere.

The ceramic monolith has a co-continuous structure formed by: a ceramic skeleton including mesopores; and macropores. The ceramic skeleton of the ceramic monolith is formed from the skeleton phase of the polymetalloxane gel, and the macropores of the ceramic monolith are formed from the solvent phase of the polymetalloxane gel.

In one embodiment, the ceramic monolith is a silica monolith. The silica monolith has a co-continuous structure formed by: a silica skeleton including mesopores; and macropores.

In another embodiment, the ceramic monolith can be a monolith of alumina, tin oxide, ceria, titania or zirconia. Also in such a case, the monolith has a co-continuous structure formed by: a skeleton of alumina, tin oxide, ceria, titania or zirconia including mesopores; and macropores.

The ceramic monolith produced may be shaped and then used as an adsorbent (for examples, an adsorbent having a shape of a columnar body), or a ceramic monolith shaped with a mold or the like may be produced and used as it is or, if necessary, shaped and used, as an adsorbent (for examples, an adsorbent having a shape of a columnar body). For example, a shaped ceramic monolith can be produced with a mold for shaping the gel into a desired shape in the producing step of the gel. The average diameter of the shaped ceramic monolith is smaller than the average diameter of a gel shaped with a mold.

The ceramic monolith produced may be pulverized and used as an adsorbent. The pulverization can be performed according to an ordinary method. The pulverization can be performed with, for example, a mortar, a hammer mill, a ball mill, a bead mill, a jet mill, or a roller mill. The particle size of the adsorbent after the pulverization is preferably 0.5 $\mu$m or more and 5.0 mm or less, more preferably 12.0 $\mu$m or more and 3.0 mm or less, still further preferably 5.0 $\mu$m or more and 1.0 mm or less. The "particle size" here means an equivalent circle diameter, namely, the diameter of a circle assumed to have the same area as the area of the adsorbent after the pulverization in an image observed (for example, SEM image) of the adsorbent after the pulverization.

<Surface modification>

A surface of the ceramic skeleton 2 in the porous body is preferably modified by a metal- and/or metal ion-adsorbable nitrogen atom-containing group. The surface of the ceramic skeleton 2 may be modified by two or more metal- and/or metal ion-adsorbable nitrogen atom-containing groups. Such a nitrogen atom-containing group may be directly bound to the surface of the ceramic skeleton 2, or may be bound to the surface of the ceramic skeleton 2 via a linker.

The surface of the ceramic skeleton 2 encompasses an inner surface and an outer surface of the ceramic skeleton 2. The inner surface of the ceramic skeleton 2 encompasses inner surfaces of the macropores 3 and the mesopores 4 present internally in the ceramic skeleton 2 (namely, not exposed on the outer surface of the ceramic skeleton 2), and the outer surface of the ceramic skeleton 2 encompasses inner surfaces of the macropores 3 and the mesopores 4 exposed on the outer surface of the ceramic skeleton 2. At least the inner surface in the surface of the ceramic skeleton 2 is preferably modified by a metal- and/or metal ion-adsorbable nitrogen atom-containing group.

Examples of the metal which can be adsorbed by the nitrogen atom-containing group include transition metals such as scandium (Sc), chromium (Cr), iron (Fe), cobalt (Co), nickel (Ni), copper (Cu), zinc (Zn), manganese (Mn), vanadium (V), platinum (Pt), palladium (Pd), rhodium (Rh), ruthenium (Ru), iridium (Ir), osmium (Os), gold (Au), silver (Ag), rhenium (Re), and tungsten (W). Among these, a noble metal such as Pt, Pd, Rh, Ru, Ir, Os, Au, Ag, or Re is preferable, a platinum-group metal such as Pt, Pd, Rh, Ru, Ir, or Os is more preferable, and Pt, Pd or Rh is still further preferable, from the viewpoint of being highly demanded to be recovered by adsorption. Examples of the form of the metal adsorbed by the functional group include a metal nanoparticle.

Examples of the metal ion which can be adsorb by the nitrogen atom-containing group include respective ions of the above transition metals. Such a metal ion is preferably a noble metal ion, more preferably a platinum-group metal ion, still further preferably a Pt ion, a Pd ion or a Rh ion, from the same viewpoint as described above.

The metal- and/or metal ion-adsorbable nitrogen atom-containing group is preferably at least one selected from a primary amino group, a secondary amino group, a tertiary amino group, a quaternary ammonium group, an imino group, a nitrilo group, and a nitrogen atom-containing heterocyclic group. The nitrogen atom-containing group is more preferably at least one selected from a primary amino group, a secondary amino group, a tertiary amino group, an imino group, a nitrilo group and a nitrogen atom-containing heterocyclic group, more preferably at least one selected from a primary amino group, a secondary amino group, a tertiary amino group, an imino group and a nitrilo group.

For example, a metal selected from cobalt, chromium, copper, iron, nickel, osmium, palladium, platinum, rhodium, ruthenium, gold, iridium, tungsten, zinc, vanadium, manganese, rhenium and the like, and/or a metal ion thereof can be adsorbed by a primary amino group, a secondary amino group, a tertiary amino group, a quaternary ammonium group, an imino group, a nitrilo group, and a nitrogen atom-containing heterocyclic group.

The primary amino group is represented by formula: $-NH_2$. The secondary amino group is represented by formula: $-NHR^1$. The tertiary amino group is represented by formula: $-NR^1R^2$. The quaternary ammonium group is represented by formula: $-N^+R^1R^2R^3$. $R^1$, $R^2$ and $R^3$ are each independently, for example, a substituted or unsubstituted alkyl group, a substituted or unsubstituted aryl group, a substituted or unsubstituted arylalkyl group, or a substituted or unsubstituted alkylaryl group. The secondary amino group and the tertiary amino group may be each an aliphatic amino group or an aromatic amino group, preferably an aliphatic amino group. Examples of the aliphatic amino group include a secondary amino group where $R^1$ is a substituted or unsubstituted alkyl group, and a tertiary amino group where both $R^1$ and $R^2$ are each a substituted or unsubstituted alkyl group. Examples of the aromatic amino group include a secondary amino group where $R^1$ is a substituted or unsubstituted aryl group, a substituted or unsubstituted arylalkyl group, or a substituted or unsubstituted alkylaryl group, and a tertiary amino group where at least one of $R^1$ and $R^2$ is a substituted or unsubstituted aryl group, a substituted or unsubstituted arylalkyl group, or a substituted or unsubstituted alkylaryl group. The quaternary ammonium group may be an aliphatic ammonium group or an aromatic ammonium group, and an aliphatic ammonium group is preferable. Examples of the aliphatic ammonium group include a quaternary ammonium group where $R^1$, $R^2$ and $R^3$ are each independently a substituted or unsubstituted alkyl group. Examples of the aromatic ammonium group include a quaternary ammonium group where at least one of $R^1$, $R^2$ and $R^3$ is a substituted or unsubstituted aryl group, a substituted or unsubstituted arylalkyl group, or a substituted or unsubstituted alkylaryl group.

The alkyl group is, for example, an alkyl group having 1 to 10 carbon atoms. The alkyl group may be linear or branched. The number of carbon atoms in the alkyl group is preferably 1 to 8, more preferably 1 to 6, still further preferably 1 to 5, still further preferably 1 to 4.

The aryl group is, for example, a monocyclic or polycyclic (for example, bicyclic or tricyclic) aromatic hydrocarbon group having 4 to 14 carbon atoms. Such a polycyclic group may be a fused ring group. Examples of the aryl group include a phenyl group and a naphthyl group. The number of carbon atoms in the aryl group is preferably 6 to 14, more preferably 6 to 10.

The arylalkyl group is an alkyl group having one or more aryl groups, and the descriptions about such alkyl group and aryl group are as described above. The number of such aryl groups in the arylalkyl group is, for example, 1, 2 or 3.

The alkylaryl group is an aryl group having one or more alkyl groups, and the descriptions about such alkyl group and aryl group are as described above. The number of such alkyl groups in the alkylaryl group is, for example, 1, 2 or 3.

The number of a substituent that such alkyl group, aryl group, arylalkyl group or alkylaryl group can have is, for example, 1, 2 or 3. Examples of such a substituent include a hydroxyl group, a halogen atom, a thiol group, a carboxyl group, a phosphate group, a sulfate group, a keto group, an alkoxy group, and an oxo group. The halogen atom is selected from a fluorine atom, a chlorine atom, a bromine atom and an iodine atom. The alkoxy group is a group represented by formula: -O-alkyl group or aryl group, and the description about the alkyl group is as described above.

Examples of the secondary amino group include aliphatic amino groups such as an N-methylamino group, an N-ethylamino group, an N-propylamino group, and an N-isopropylamino group, and aromatic amino groups such as an N-phenylamino group (anilino group).

Examples of the tertiary amino group include aliphatic amino groups such as an N,N-dimethylamino group, an N,N-diethylamino group, an N,N-methylethylamino group, an N,N-dipropylamino group, and an N,N-diisopropylamino group, and aromatic amino groups such as an N,N-diphenylamino group.

Examples of the quaternary ammonium group include trialkylammonium groups such as a trimethylammonium group, a triethylammonium group, and a tributylammonium group. Examples of a counter ion to a nitrogen atom constituting the quaternary ammonium group include a chloride ion, a bromide ion, and a hydroxide ion.

The imino group is a divalent group represented by formula: =NH or formula: -NH-. The imino group may be bound to one carbon atom via a double bond (namely, C=NH), or may be bound to two carbon atoms via single bonds (namely, C-NH-C), and the latter is preferable. -NH- in the secondary amino group (-NHR$^1$) can correspond to the imino group, and the secondary amino group is preferably a terminal group. In other words, $R^1$ in the secondary amino group (-NHR$^1$) preferably does not have any nitrogen atom-containing group that is at least one selected from a primary amino group, a secondary amino group, a tertiary amino group, a quaternary ammonium group, an imino group, a nitrilo group and a nitrogen atom-containing heterocyclic group.

The nitrilo group is a trivalent group represented by formula: =N or formula: -N<. The nitrilo group may be bound to one carbon atom via a triple bond (namely, C≡N), or may be bound to three carbon atoms via single bonds (namely, C-N(-C)-C), and the latter is preferable. In the former case, the nitrilo group is taken with one carbon atom to thereby form a cyano group (-CN). -N< in the tertiary amino group (-NR$^1$R$^2$) can correspond to the nitrilo group, and the tertiary amino group is preferably a terminal group. In other words, both $R^1$ and $R^2$ in the tertiary amino group (-NR$^1$R$^2$) preferably do not have any nitrogen atom-containing group that is at least one selected from a primary amino group, a secondary amino group, a tertiary amino group, a quaternary ammonium group, an imino group, a nitrilo group and a nitrogen atom-containing heterocyclic group.

The nitrogen atom-containing heterocyclic group is a monovalent group containing at least one (for example, one, two or three) nitrogen atom as a ring-constituting atom. The nitrogen atom-containing heterocyclic group may contain, in addition to at least one nitrogen atom, one or more (for example, one, two or three) hetero atoms selected from an oxygen atom and a sulfur atom, as ring-constituting atoms. The nitrogen atom-containing heterocyclic group may be monocyclic or polycyclic (for example, bicyclic or tricyclic). The number of ring members in such a monocyclic nitrogen atom-containing heterocyclic group is, for example, 3 to 8, preferably 5 or 6. The number of ring members in such a polycyclic nitrogen atom-containing heterocyclic group is, for example, 9 to 14, preferably 9 or 10. The nitrogen atom-containing heterocyclic group may or may not have aromaticity (namely, may be an aromatic heterocyclic group or an aliphatic heterocyclic group). The nitrogen atom-containing heterocyclic group may have a substituent. The number of such a substituent is, for example, 1, 2 or 3. Examples of such a substituent include a hydroxyl group, a halogen atom, a thiol group, a carboxyl group, a phosphate group, a sulfate group, a keto group, an alkoxy group, and an oxo group. Examples of the halogen are as described above. The description about the alkoxy group is as described above.

Examples of the nitrogen atom-containing heterocyclic group include a 5- or 6-membered monocyclic nitrogen atom-containing heterocyclic group. Examples of the 5- or 6-membered monocyclic nitrogen atom-containing heterocyclic group having aromaticity include a pyrrolyl group, an imidazolyl group, a pyrazolyl group, an oxazolyl group, a thiazolyl group, an isothiazolyl group, a triazolyl group, an oxadiazolyl group, a thiadiazolyl group, a tetrazolyl group, a pyridyl group, a pyridazinyl group, a pyrimidinyl group, and a pyrazinyl group. Examples of the 5- or 6-membered monocyclic nitrogen atom-containing heterocyclic group not having aromaticity include a pyrrolidinyl group, a pyrazolidinyl group, an imidazolidinyl group, a piperidinyl group, a piperazinyl group, a morpholino group, and a thiomorpholino group. The 5- or 6-membered monocyclic nitrogen atom-containing heterocyclic group not having aromaticity may have one or two unsaturated bonds in its ring, and examples of such a nitrogen atom-containing heterocyclic group include a 1,2-dihydropyridyl group, a 1,4-dihydropyridyl group, and 1,2,5,6-tetrahydropyridyl group. The 5- or 6-membered monocyclic nitrogen atom-containing heterocyclic group having or not having aromaticity may be fused to a benzene ring, and examples of the polycyclic (for example, bicyclic or tricyclic) nitrogen atom-containing heterocyclic group include an indolyl group, an isoindolyl group, an indazolyl group, a benzimidazolyl group, a benzotriazolyl group, an oxazolopyrimidinyl group, a thiazolopyrimidinyl group, a pyrrolopyridinyl group, a pyrrolopyrimidinyl group, an imidazopyridinyl group, a purinyl group, a quinolinyl group, an isoquinolinyl group, a cinnolinyl group, a phthalazinyl group, a quinazolinyl group, a quinoxalinyl group, and a naphthyridinyl group.

A binding hand of the nitrogen atom-containing heterocyclic group may be formed by any ring-constituting atom. The binding hand of the nitrogen atom-containing heterocyclic group is usually formed by a carbon atom or a nitrogen atom. When the binding hand of the nitrogen atom-containing heterocyclic group is formed by a nitrogen atom, the nitrogen atom-containing heterocyclic group corresponds to a heterocyclic amino group. Examples of the 5- or 6-membered monocyclic heterocyclic amino group having aromaticity include a 1-pyrrolyl group, a 1-imidazolyl group, a 1-pyrazolyl group, a 3-oxazolyl group, a 3-thiazolyl group, a 1-pyridyl group, a 1-pyridazinyl group, a 1-pyrimidinyl group, and a 1-pyrazinyl group. Examples of the 5- or 6-membered monocyclic heterocyclic amino group not having aromaticity (namely, alicyclic amino group) include a 1-pyrrolidinyl group, a 1-pyrazolidinyl group, a 1-imidazolidinyl group, a 1-piperidinyl group, a 1-piperazinyl group, a morpholino group, and a thiomorpholino group.

In one embodiment, the surface of the ceramic skeleton 2 is modified by a nitrogen atom-containing group by fixing a compound having a nitrogen atom-containing group, to the surface of the ceramic skeleton 2. Examples of a method of introducing the compound having a nitrogen atom-containing group, to the surface of the ceramic skeleton 2, include a method involving chemically fixing the compound having a nitrogen atom-containing group (for example, silane coupling agent having a nitrogen atom-containing group), to the surface of the ceramic skeleton 2, via a covalent bond, and a method involving physically fixing a compound having a nitrogen atom-containing group, to the surface of the ceramic skeleton 2, through an ion bond or physical interaction such as hydrophobic interaction. Examples of a method involving chemically introducing the compound having a nitrogen atom-containing group, to the surface of the ceramic skeleton 2, include a method involving reacting a functional group (for example, hydroxyl group) on the surface of the ceramic skeleton 2 and a silane coupling agent containing a nitrogen atom-containing group to thereby chemically fix the silane coupling agent to the surface of the ceramic skeleton 2. A compound having a nitrogen atom-containing group may be fixed to the surface of the ceramic skeleton 2 via a linker. For example, a functional group reactive with a compound having a nitrogen atom-containing group may be introduced to the surface of the ceramic skeleton 2 and thereafter the functional group introduced and the compound having a nitrogen atom-containing group may be reacted to thereby chemically fix the compound having a nitrogen atom-containing group, to the surface of the ceramic skeleton 2. Examples of a method involving introducing the functional group reactive with the compound having a nitrogen atom-containing group, to the surface of the ceramic skeleton 2, include a method involving reacting a functional group (for example, hydroxyl group) on the surface of the ceramic skeleton 2 and a silane coupling agent having the functional group reactive with the compound having a nitrogen atom-containing group to thereby chemically fix the silane coupling agent to the surface of the ceramic skeleton 2. Examples of the silane coupling agent having the functional group reactive with the compound having a nitrogen atom-containing group include a silane coupling agent having an epoxy group and/or a haloalkyl group. Examples of the silane coupling agent having an epoxy group include 3-glycidyloxypropyltrimethoxysilane. Examples of the silane coupling agent having a haloalkyl group include 3-chloropropyltrimethoxysilane.

An amine compound can be used as a compound having a nitrogen atom-containing group. The amine compound is not particularly limited as long as it contains a nitrogen atom-containing group that is at least one selected from a primary amino group, a secondary amino group, a tertiary amino group, a quaternary ammonium group, an imino group, a nitrilo group and a nitrogen atom-containing heterocyclic group. A moiety of the amine compound, other than a nitrogen atom-containing group, may be constituted by a hydrogen atom and a carbon atom, or may contain, in addition to a hydrogen atom and a carbon atom, one, or two or more other elements (for example, an oxygen atom, a sulfur atom, a halogen atom, and/or a silicon atom).

For example, at least one selected from monoamine, diamine, triamine and polyamine can be used as an amine compound. Two or more such amine compounds may also be used. The amine compound may also be a silane coupling agent.

Examples of a silane coupling agent containing a nitrogen atom-containing group that is at least one selected from a primary amino group, a secondary amino group, a tertiary amino group, a quaternary ammonium group, an imino group, a nitrilo group and a nitrogen atom-containing heterocyclic group include a silane coupling agent represented by the following formula A, B or C.

Formula A: $R^a\text{-}R^d\text{-}Si(\text{-}R^b)_n(\text{-}R^c)_{3-n}$

Formula B: $R^a\text{-}R^d\text{-}NH\text{-}R^e\text{-}Si(\text{-}R^b)_n(\text{-}R^c)_{3-n}$

Formula C: $R^a\text{-}R^d\text{-}NH\text{-}R^e\text{-}NH\text{-}R^f\text{-}Si(\text{-}R^b)_n(\text{-}R^c)_{3-n}$

In formulae A, B and C, $R^a$ represents a primary amino group, a secondary amino group, a tertiary amino group, a quaternary ammonium group or a nitrogen atom-containing heterocyclic group, n of $R^b$(s) each independently represent a linear or branched alkyl group having 1 to 10 carbon atoms, preferably 1 to 8, more preferably 1 to 6, still further preferably 1 to 5, still further preferably 1 to 4, (3-n) of $R^c$(s) each independently represent a linear or branched alkoxy group having 1 to 10 carbon atoms, preferably 1 to 8, more preferably 1 to 6, still further preferably 1 to 5, still further preferably 1 to 4, or a halogen group, $R^d$, $R^e$ and $R^f$ each independently represent a linear or branched alkylene group having 1 to 10 carbon atoms, preferably 1 to 8, more preferably 1 to 6, still further preferably 1 to 5, still further preferably 1 to 4, an arylene group having 4 to 14 carbon atoms, preferably 6 to 14, more preferably 6 to 10, or a combination thereof, and n represents an integer of 0 to 2. The alkylene group and the arylene group are each a divalent functional group generated by removal of one hydrogen atom from each of an alkyl group and an aryl group, and the descriptions about such alkyl group and aryl group are as described above.

$R^a$ is preferably selected from a primary amino group, a secondary amino group, a tertiary amino group and a nitrogen atom-containing heterocyclic group, more preferably selected from a primary amino group, a secondary amino group and a tertiary amino group.

Examples of the alkyl group represented by $R^b$ include a methyl group, an ethyl group, a propyl group, and a butyl group.

Examples of the alkoxy group or the halogen group represented by $R^c$ include a methoxy group, an ethoxy group, a propoxy group, a butoxy group, a chloro group, a bromo group, and an iodo group. The alkoxy group represented by $R^c$ is preferably a methoxy group or an ethoxy group. The halogen group represented by $R^c$ is preferably a chloro group.

Examples of the alkylene group represented by $R^d$, $R^e$ or $R^f$ include a methylene group, an ethylene group, a propylene group, and a butylene group.

Examples of the arylene group represented by $R^d$, $R^e$ or $R^f$ include a phenylene group, a naphthylene group, and a biphenylene group.

Examples of the combination of the alkylene group and the arylene group represented by $R^d$, $R^e$ or $R^f$ include a group represented by formula: -X-Y-, formula: -Y-X-, formula: -X-Y-X- or formula: -Y-X-Y-. In the formulae, X represents an alkylene group and Y represents an arylene group.

The alkylene groups, the arylene groups or the combinations thereof represented by $R^d$, $R^e$ and $R^f$ may each have a substituent. The number of a substituent is, for example, 1, 2 or 3. Examples of such a substituent include a hydroxyl group, a halogen atom, a thiol group, a carboxyl group, a phosphate group, a sulfate group, a keto group, an alkoxy group, and an oxo group. Examples of the halogen are as described above. The description about the alkoxy group is as described above.

The monoamine has one nitrogen atom-containing group selected from a primary amino group, a secondary amino group, a tertiary amino group, a quaternary ammonium group, an imino group, a nitrilo group and a nitrogen atom-containing heterocyclic group. Examples of the monoamine include a silane coupling agent represented by formula A, and examples of the silane coupling agent represented by formula A include 3-aminopropyltrimethoxysilane, 3-aminopropyltriethoxysilane, 3-(N-phenyl)aminopropyltrimethoxysilane, and 3-(4-pyridyl) propyltrimethoxysilane.

The diamine has two nitrogen atom-containing groups selected from a primary amino group, a secondary amino group, a tertiary amino group, a quaternary ammonium group, an imino group, a nitrilo group and a nitrogen atom-containing heterocyclic group. The two nitrogen atom-containing groups may be the same or different. Examples of the diamine include a silane coupling agent represented by formula B, and examples of the silane coupling agent represented by formula B include 3-(2-aminoethylamino)propyltrimethoxysilane, N-2-(aminoethyl)-3-aminopropylmethyldimethoxysilane, N-2-(aminoethyl)-3-aminopropyltrimethoxysilane, N-2-(aminoethyl)-3-aminopropyltriethoxysilane, and N-(vinylbenzyl)-2-aminoethyl-3-aminopropyltrimethoxysilane hydrochloride.

The triamine has three nitrogen atom-containing groups selected from a primary amino group, a secondary amino group, a tertiary amino group, a quaternary ammonium group, an imino group, a nitrilo group and a nitrogen atom-containing heterocyclic group. The three nitrogen atom-containing groups may be the same or different. Examples of the triamine include a silane coupling agent represented by formula C, and examples of the silane coupling agent represented by formula C include 3-[2-(2-aminoethylamino)ethylamino] propyltrimethoxysilane.

The polyamine has four or more nitrogen atom-containing groups selected from a primary amino group, a secondary amino group, a tertiary amino group, a quaternary ammonium group, an imino group, a nitrilo group and a nitrogen atom-containing heterocyclic group. The four or more nitrogen atom-containing groups may be the same or different. Examples of the polyamine include polyalkyleneimine, polyvinylamine, and polyallylamine.

Examples of the polyalkyleneimine include a polymer obtained by polymerizing one, or two or more alkyleneamines by an ordinary method. The polyalkyleneimine may also be a polymer obtained from chemical modification by reaction of a polymer obtained by polymerizing one, or two or more alkyleneamines by an ordinary method, with a desired compound. The polyalkyleneimine may be linear or branched. Examples of the polyalkyleneimine include triethylenetetramine, tetraethylenepentamine, pentaethylenehexamine, polyethyleneimine, polypropyleneimine, and polybutyleneimine.

The weight average molecular weight of the polyalkyleneimine is, for example, 146 or more and 30000 or less, preferably 146 or more and 15000 or less, more preferably 146 or more and 5000 or less, still further preferably 146 or more and 1800 or less. The weight average molecular weight of the polyvinylamine is, for example, 174 or more and 25000 or less, preferably 174 or more and 6000 or less. The weight average molecular weight of the polyallylamine is, for example, 230 or more and 150000 or less, preferably 230 or more and 15000 or less, more preferably 230 or more and 8000 or less, still further preferably 230 or more and 5000 or less. The weight average molecular weight can be measured, for example, with polystyrene as a standard substance by a gel permeation chromatoprahy (GPC) method.

A porous body in which a surface of a ceramic skeleton 2 is modified by a metal- and/or metal ion-adsorbable nitrogen atom-containing group has more excellent adsorption performance than a conventional adsorbent (for example, mesoporous silica or an ion exchange resin). In a case where a solution containing a metal and/or a metal ion is in contact with an adsorbent, the adsorption performance of the adsorbent can be evaluated based on the adsorption rate calculated from the amount of a metal and/or a metal ion adsorbed by the adsorbent (the percentage of the amount of a metal and/or a metal ion adsorbed by the adsorbent relative to the amount of a metal and/or a metal ion originally contained in the solution). In a case where a solution containing a metal and/or a metal ion is in contact with an adsorbent for a predetermined period of time, the adsorption performance of the adsorbent can be evaluated based on the adsorption rate calculated from the amount of a metal and/or a metal ion adsorbed by the adsorbent or the adsorption speed calculated by dividing the amount of a metal and/or a metal ion adsorbed by the adsorbent by the predetermined period of time. The "adsorption performance" in the present invention means both the adsorption rate and the adsorption speed, and the adsorption speed is placed ahead of the adsorption rate in the present invention from the viewpoint that the recovery speed of a substance to be adsorbed is of importance in practical use of the adsorbent.

In general, as the amount of a metal- and/or metal ion-adsorbable functional group introduced onto a surface of a porous body is larger, adsorption performance is enhanced. However, when a metal- and/or metal ion-adsorbable nitrogen atom-containing group is introduced onto a surface of a ceramic skeleton 2, the amount of the nitrogen atom-containing group introduced, if too large, causes an increase in hydrophobicity of the porous body and hardly allows a metal- and/or metal ion-containing solution to penetrate into a pore, to prevent the functional group introduced from being effectively utilized, thereby leading to deterioration in adsorption performance. Accordingly, the amount of the metal- and/or metal ion-adsorbable nitrogen atom-containing group contained in the porous body is preferably 1.5 mmol/g or more and 5.4 mmol/g or less, more preferably 1.8 mmol/g or more and 4.5 mmol/g or less, still further preferably 2.0 mmol/g or more and 4.0 mmol/g or less based on the mass of the porous body. The metal- and/or metal ion-adsorbable nitrogen atom-containing group contained in the porous body is derived from a compound having a nitrogen atom-containing group, which modifies a surface of a ceramic skeleton 2. The "amount of such a nitrogen atom-containing group" means, in a case where the porous body contains one nitrogen atom-containing group, the amount of such one metal- and/or metal ion-adsorbable nitrogen atom-containing group, and means, in a case where the porous body contains two or more nitrogen atom-containing group, the total amount of such two or more metal- and/or metal ion-adsorbable nitrogen atom-containing groups. The "amount of such a nitrogen atom-containing group" means the amount in terms of nitrogen atom. The amount of such a nitrogen atom-containing group can be measured according to an ordinary method. For example, the amount of such a nitrogen atom-containing group can be measured according to a method described in Examples below.

< <Adsorbent> >

The adsorbent of the present invention includes the porous body of the present invention. A surface of the ceramic skeleton 2 in the adsorbent of the present invention is modified by a metal- and/or metal ion-adsorbable nitrogen atom-containing group.

The adsorbent of the present invention is an adsorbent for adsorption of a metal and/or a metal ion. The adsorbent of the present invention is, for example, packed in a column and then used for adsorption of a metal and/or a metal ion.

As described above, the adsorbent having both adsorption performance and durability (preferably, adsorbent having a shape of a columnar body having an average diameter of 1.5 mm or more and 20 mm or less, more preferably, adsorbent having a shape of a columnar body having an average diameter of 1.5 mm or more and 20 mm or less and an aspect ratio of 0.70 or more) is particularly useful when repeatedly regenerated and used for adsorption of a metal and/or a metal ion. The adsorbent having both adsorption performance and durability can exhibit excellent adsorption performance even when repeatedly regenerated and used.

<<Method of using adsorbent> >

A method of using the adsorbent of the present invention is a method of removing a metal and/or a metal ion from a solution containing a metal and/or a metal ion, and includes a step of contacting a solution containing a metal and/or a metal ion (hereinafter, referred to as "liquid to be treated") and the adsorbent of the present invention.
When the liquid to be treated and the adsorbent of the present invention are contacted, the metal and/or the metal ion contained in the liquid to be treated are/is adsorbed by the adsorbent of the present invention. Thus, the metal and/or the metal ion are/is removed from the liquid to be treated.
Examples of the liquid to be treated include a waste liquid discharged from a plant or the like, and a drainage containing valuable metals discharged in a metal refining step. The liquid to be treated usually includes water. The waste liquid may be contacted with the adsorbent of the present invention optionally after pre-treatment.
The metal and/or the metal ion contained in the liquid to be treated are/is not limited as long as the metal and/or the metal ion can be adsorbed by the adsorbent of the present invention.
Examples of a method of contacting the liquid to be treated and the adsorbent of the present invention include a method involving immersing the adsorbent of the present invention in the liquid to be treated, and a method involving allowing the liquid to be treated to pass through a column in which the adsorbent of the present invention is packed. Such passing of the liquid can be performed with, for example, a liquid feeding pump.
When the adsorbent having both adsorption performance and durability (preferably, adsorbent having a shape of a columnar body having an average diameter of 1.5 mm or more and 20 mm or less, more preferably, adsorbent having a shape of a columnar body having an average diameter of 1.5 mm or more and 20 mm or less and an aspect ratio of 0.70 or more) is used as the adsorbent in the method of immersing the adsorbent in the liquid to be treated, an obtained advantage is that the adsorbent and the liquid to be treated are easily separated by solid-liquid separation such as filtration.
The adsorbent of the present invention is particularly useful for a case of removal of a metal and/or a metal ion from a liquid to be treated having a low concentration(s) of a metal and/or a metal ion (concentration(s) of a metal and/or a metal ion of, for example, 0.2 ppm or more and 300 ppm or less, in particular, 0.2 ppm or more and 200 ppm or less).

EXAMPLES

Hereinafter, the present invention is further specifically described with reference to Production Examples and Test Examples, but the present invention is not limited to these Production Examples and Test Examples at all.

[Production Example 1]

(1) Production of silica monolith pellet

To a 150-mL reaction container were added 9.10 g of polyethylene glycol 10000 (manufactured by Sigma-Aldrich Co. LLC), 7.80 g of urea and 86.7 g of an aqueous 6.06% by mass acetic acid solution, and stirred at room temperature for 10 minutes. The reaction container was placed in an ice bath, and a reaction solution was cooled under stirring for 15 minutes. To the cooled reaction solution was added 43.3 g of tetramethoxysilane, and stirred for 30 minutes under cooling in the ice bath. A mold for forming a cylindrical silica monolith pellet having an average diameter of 4.6 mm was added to the reaction container, and the reaction solution was warmed in a warm bath at 30°C and then left to still stand overnight in an incubator at 30°C, to thereby produce a polysiloxane gel.
Next, the obtained polysiloxane gel was added to another reaction container in which 100 mL of 3 mol/L urea water was placed, and heated and refluxed for 24 hours. After completion of the reaction, the obtained polysiloxane gel was washed with water, and dried in a drier set at 60°C for 12 hours. After the drying, the polysiloxane gel was fired at 600°C for 5 hours under an air atmosphere, and thus 15 g of a cylindrical silica monolith pellet having an average diameter of 4.6 mm was obtained. The obtained silica monolith pellet was cut and adjusted to a length of 7.4 mm, and thus a silica monolith pellet having an aspect ratio of 1.6 was produced.

(2) Observation with scanning electron microscope

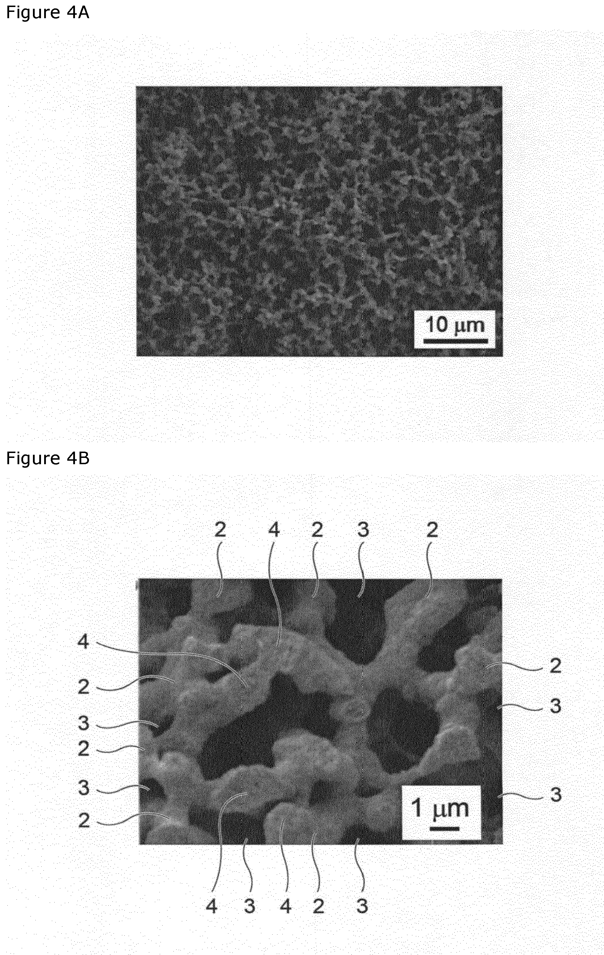

A surface structure of the silica monolith pellet obtained in (1) was observed with a scanning electron microscope (JSM-7900F manufactured by JEOL Ltd.). The observation results are illustrated in Figure 4A and Figure 4B. As illustrated in Figure 4A and Figure 4B, the silica monolith pellet had a co-continuous structure formed by: a silica skeleton including mesopores; and macropores. Symbols in Figure 4B are the same as the symbols in Figure 3.

(3) Measurement of specific surface area and most frequent pore diameter of mesopores

The specific surface area and the most frequent pore diameter of mesopores were measured with a specific surface area/pore distribution measuring apparatus "BELSORP-miniX" manufactured by MicrotracBEL Corp. The amounts of absorption and desorption of nitrogen with liquid nitrogen at a temperature of 77 K, by a silica monolith pellet subjected to degassing under reduced pressure at 400°C for 3 hours, were measured by a multipoint method, to thereby determine an adsorption-desorption isotherm, and the specific surface area and the most frequent pore diameter were calculated based on the adsorption-desorption isotherm. The specific surface area was calculated by the BET method, and the most frequent pore diameter was calculated by the BJH method.
The BJH method is a method for analysis of a distribution of a pore volume to a pore diameter under the assumption that pores are cylindrical according to a standard model of Barrett-Joyner-Halenda (the detail is found in, for example, J. Amer. Chem. Soc., 73, 373, 1951). In the present invention, pores having a diameter of 2 to 200 nm were analyzed.

(4) Measurement of total pore volume, most frequent pore diameter of macropores, and porosity

The total pore volume, most frequent pore diameter of macropores, and porosity were measured with a mercury porosimeter ("AutoPore IV 9520" manufactured by Micromeritics Instrument Corporation) by a mercury intrusion method. In the mercury intrusion method, mercury was allowed to penetrate by application of pressure to pores of a silica monolith pellet, the pore volume and the specific surface area were determined from the pressure and the amount of mercury intruded, and the pore diameter was calculated from a relationship between the pore volume and the specific surface area under the assumption that pores are cylindrical. In the present invention, pores having a diameter of 50 nm to 500 $\mu$m were analyzed in the mercury intrusion method. The following conditions and procedures were used for the measurements.

(Measurement conditions)

- Mercury parameters

    Advancing contact angle: 130.0°
    Receding contact angle: 130.0°
    Surface tension: 485.0 mN/m (485.0 dynes/cm)
    Mercury density: 13.5335 g/mL

- Low-pressure parameters

    Discharge pressure: 50 $\mu$mHg
    Discharge time: 5.0 minutes
    Mercury intrusion pressure: 0.0035 MPa
    Equilibrium time: 10 seconds

- High-pressure parameters
    Equilibrium time: 10 seconds
- Intrusion volume: modulated to 25% or more and 90% or less
- Measurement environment: 20°C

(Measurement procedure)

(i) Weigh about 0.5 g of a sample and place it in a specimen cell, and input a value weighed.
(ii) Measurement in the range from 0.0048 to 0.2068 MPa at a low pressure portion.
(iii) Measurement in the range from 0.2068 to 255.1060 MPa at a high pressure portion.
(ii) and (iii) were automatically performed with software attached to an apparatus.

The results in (3) and (4) above are shown in Table 1.

[Table 1]

| Production Example 1 | | |
|---|---|---|
| Analysis by BET Method | Specific Surface Area (m²/g) | 325.6 |
| Analysis by BJH Method | Most Frequent Pore Diameter of Mesopores (nm) | 21.4 |
| Analysis by Mercury Intrusion Method | Total Pore Volume (mL) | 3.43 |
| | Most Frequent Pore Diameter of Macropores ($\mu$m) | 1.26 |
| | Porosity (%) | 84.8 |
| Ratio of Pore Diameter of Macropores to Pore Diameter of Mesopores | | 58.9 |

[Production Examples 2 to 8]

Each cylindrical silica monolith pellet was produced in the same manner as in Production Example 1 except that a mold for forming a cylindrical silica monolith pellet having an average diameter of 1.2 mm, 1.5 mm, 3.0 mm, 3.7 mm, 6.0 mm, 11.0 mm or 20.0 mm was used, and the length of the obtained cylindrical silica monolith pellet having an average diameter of 1.2 mm, 1.5 mm, 3.0 mm, 3.7 mm, 6.0 mm, 11.0 mm or 20.0 mm was adjusted as described in Table 2 so that the aspect ratio was 1.6.

[Production Examples 9 to 13]

Each cylindrical silica monolith pellet was produced in the same manner as in Production Example 1 except that the length of the silica monolith pellet was adjusted as described in Table 3 so that the aspect ratio was 0.5, 0.9, 1.0, 1.9 or 3.3.

[Test Example 1] Pellet strength test

A side surface of each of the silica monolith pellets in dry states, obtained in Production Examples 1 to 13, was pressurized with a digital hardness meter KHT-40 N manufactured by Fujiwara Scientific Co., Ltd. (diameter under pressure: 3 mm), and the pressure (N) at breakage was measured. In addition, each of the silica monolith pellets in a water-absorbing state, obtained by placing each of the silica monolith pellets in dry states, obtained in Production Examples 1 to 13, in pure water for 30 minutes, was also subjected to the same measurement of the pressure (N) at breakage as described above. The strength test of the silica monolith pellet in each Production Example was performed with five such pellets, and the arithmetic average value of five measurement values was determined. The measurement results are shown in Tables 2 and 3.

[Table 2]

| | Production Example | | | |
|---|---|---|---|---|
| | 1 | 2 | 3 | 4 |
| Average Diameter (mm) | 4.6 | 1.2 | 1.5 | 3.0 |
| Length (mm) | 7.4 | 1.92 | 2.4 | 4.8 |
| Aspect Ratio | 1.6 | 1.6 | 1.6 | 1.6 |
| Dry State (N) | 23.55 | 1.66 | 4.92 | 9.65 |
| Water-Absorbing State (N) | 24.01 | 1.11 | 4.33 | 9.88 |

(continued)

|  | Production Example | | | |
| --- | --- | --- | --- | --- |
|  | 5 | 6 | 7 | 8 |
| Average Diameter (mm) | 3.7 | 6.0 | 11.0 | 20.0 |
| Length (mm) | 5.9 | 9.6 | 17.6 | 32.0 |
| Aspect Ratio | 1.6 | 1.6 | 1.6 | 1.6 |
| Dry State (N) | 14.38 | 24.58 | 60.20 | 32.37 |
| Water-Absorbing State (N) | 19.58 | 17.70 | 38.70 | 31.62 |

[Table 3]

|  | Production Example | | | | | |
| --- | --- | --- | --- | --- | --- | --- |
|  | 1 | 9 | 10 | 11 | 12 | 13 |
| Length (mm) | 7.4 | 2.3 | 4.1 | 4.6 | 8.7 | 15.2 |
| Aspect Ratio | 1.6 | 0.5 | 0.9 | 1.0 | 1.9 | 3.3 |
| Dry State (N) | 23.55 | 10.17 | 18.15 | 22.93 | 21.93 | 20.01 |
| Water-Absorbing State (N) | 24.01 | 8.26 | 17.57 | 13.74 | 21.72 | 19.97 |

[Production Example 14]

To a reaction container was added 10.0 g of the silica monolith pellet obtained in Production Example 1, 60 mL of toluene and 7.45 g of 3-aminopropyltrimethoxysilane were added thereto, and then heated and refluxed at 110°C for 12 hours. The silica monolith pellet was separated from the toluene solution by filtration, washed with 30 mL of ethanol three times, and dried under reduced pressure, and thus 12.0 g of a silica monolith adsorbent was obtained.

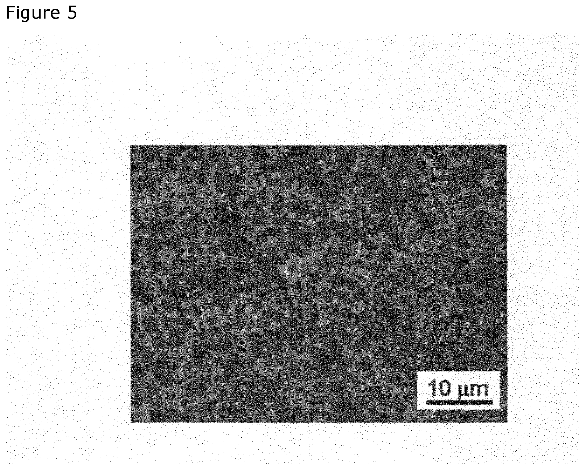

The silica monolith adsorbent obtained in Production Example 14 was observed with a scanning electron microscope in the same manner as in Production Example 1. The observation results are illustrated in Figure 5. As illustrated in Figure 5, the same appearance as those in Figure 4A and Figure 4B was observed, and the silica monolith adsorbent had a co-continuous structure formed by: a silica skeleton including mesopores; and macropores.

The strength of the silica monolith adsorbent obtained in Production Example 14 was measured in the same manner as in Test Example 1. The measurement results are shown in Table 4.

[Table 4]

|  | Production Example | |
| --- | --- | --- |
|  | 1 | 14 |
| Treatment with Silane Coupling Agent | Not treated | Treated |
| Dry State (N) | 23.55 | 19.65 |
| Water-Absorbing State (N) | 24.01 | 14.90 |

The amount of the nitrogen atom-containing group ($-NH_2$) contained in the silica monolith adsorbent obtained in Production Example 14 was quantitatively determined with an oxygen/nitrogen/hydrogen analyzer ONH836 manufactured by LECO Japan Corporation. The quantitative determination results are shown in Table 5A.

[Production Example 15]

A silica monolith adsorbent was produced in the same manner as in Production Example 14 except that the silica monolith pellet obtained in Production Example 4 was used instead of the silica monolith pellet obtained in Production Example 1. The amount of the nitrogen atom-containing group ($-NH_2$) contained in the silica monolith adsorbent obtained in Production Example 15 was quantitatively determined in the same manner as in Production Example 14. The quantitative determination results are shown in Table 5A.

[Production Example 16]

A silica monolith adsorbent was produced in the same manner as in Production Example 14 except that the silica monolith pellet obtained in Production Example 6 was used instead of the silica monolith pellet obtained in Production Example 1. The amount of the nitrogen atom-containing group (-NH$_2$) contained in the silica monolith adsorbent obtained in Production Example 16 was quantitatively determined in the same manner as in Production Example 14. The quantitative determination results are shown in Table 5A.

[Production Example 17]

A silica monolith adsorbent was produced in the same manner as in Production Example 14 except that the silica monolith pellet obtained in Production Example 7 was used instead of the silica monolith pellet obtained in Production Example 1. The amount of the nitrogen atom-containing group (-NH$_2$) contained in the silica monolith adsorbent obtained in Production Example 17 was quantitatively determined in the same manner as in Production Example 14. The quantitative determination results are shown in Table 5A.

[Test Example 2A] Metal adsorption test by immersion in solution

In 30 mL of an aqueous solution containing 100 ppm of each of platinum nitrate, palladium nitrate and rhodium nitrate was immersed 0.5 g of each of the silica monolith adsorbents of Production Examples 14 to 17, and stirred at room temperature for 30 minutes. After completion of the reaction, such each silica monolith adsorbent was separated by filtration, and the amount of each metal element contained in the resulting filtrate was analyzed with an ICP optical emission spectrometer (PS3520 UVDD manufactured by Hitachi, Ltd.). The percentage of the amount of a platinum element adsorbed by such each silica monolith adsorbent relative to the amount of a platinum element originally contained in the aqueous solution (hereinafter, referred to as "platinum adsorption rate"), the percentage of the amount of a palladium element adsorbed by such each silica monolith adsorbent relative to the amount of a palladium element originally contained in the aqueous solution (hereinafter, referred to as "palladium adsorption rate"), and the percentage of the amount of a rhodium element adsorbed by such each silica monolith adsorbent relative to the amount of a rhodium element originally contained in the aqueous solution (hereinafter, referred to as "rhodium adsorption rate") were calculated. The platinum adsorption rate, the palladium adsorption rate and the rhodium adsorption rate are shown in Table 5A. In Table 5A, "> 95" indicates that the adsorption rate exceeded 95% corresponding to an analysis guaranteed value.

[Table 5A]

|  | Production Example | | | |
|---|---|---|---|---|
|  | 14 | 15 | 16 | 17 |
| Average Diameter (mm) | 4.6 | 3.0 | 6.0 | 11.0 |
| Amount of Nitrogen Atom-Containing Group (mmol/g) | 1.79 | 1.50 | 2.07 | 1.79 |
| Platinum Adsorption Rate (%) | >95 | >95 | >95 | 79.0 |
| Palladium Adsorption Rate (%) | >95 | >95 | >95 | 86.0 |
| Rhodium Adsorption Rate (%) | >95 | >95 | >95 | 43.0 |

[Test Example 2B] Metal adsorption test by immersion in solution

In 50 mL of an aqueous solution (containing 10 ppm of each metal element of Cd, Cr, Co, Cu, Fe, Mn, Ni, Ag, V, and Zn) obtained by diluting TraceCERT Transition metal mix 1 for ICP solution (manufactured by Sigma-Aldrich Co. LLC) 10-fold with pure water was immersed 2.5 g of the silica monolith adsorbent of Production Example 14, and left to still stand at room temperature for 24 hours. After completion of the reaction, the silica monolith adsorbent was separated by filtration, and the amount of each metal element contained in the resulting filtrate was analyzed with an ICP optical emission spectrometer (PS3520 UVDD manufactured by Hitachi, Ltd.). The percentage of the amount of each metal element adsorbed by the silica monolith adsorbent relative to the amount of each metal element originally contained in the aqueous solution (hereinafter, referred to as "adsorption rate") was calculated for each metal element. The adsorption rate with respect to each metal element is shown in Table 5B.

[Table 5B]

| Metal Element | Cd | Cr | Co | Cu | Fe | Mn | Ni | Ag | V | Zn |
|---|---|---|---|---|---|---|---|---|---|---|
| Adsorption Rate (%) | 8 | 51 | 8 | 42 | 68 | 7 | 7 | 93 | 79 | 43 |

[Test Example 2C] Metal adsorption test by immersion in solution

In 50 mL of an aqueous solution (containing 10 ppm of each metal element of Au, Ir, Os, Pd, Pt, Rh, and Ru) obtained by diluting TraceCERT Transition metal mix 3 for ICP solution (manufactured by Sigma-Aldrich Co. LLC) 10-fold with pure water was immersed 2.5 g of the silica monolith adsorbent of Production Example 14, and left to still stand at room temperature for 24 hours. After completion of the reaction, the silica monolith adsorbent was separated by filtration, and the amount of each metal element contained in the resulting filtrate was analyzed with an ICP optical emission spectrometer (PS3520 UVDD manufactured by Hitachi, Ltd.). The percentage of the amount of each metal element adsorbed by the silica monolith adsorbent relative to the amount of each metal element originally contained in the aqueous solution (hereinafter, referred to as "adsorption rate") was calculated for each metal element. The adsorption rate with respect to each metal element is shown in Table 5C. In Table 5C, "> 95" indicates that the adsorption rate exceeded 95% corresponding to an analysis guaranteed value under the measurement conditions.

[Table 5C]

| Metal Element | Au | Ir | Os | Pd | Pt | Rh | Ru |
|---|---|---|---|---|---|---|---|
| Adsorption Rate (%) | 54 | >95 | >95 | >95 | >95 | 89 | 92 |

[Production Example 18]

A silica monolith pellet was produced in the same manner as in Production Example 1 except that the amount of polyethylene glycol 10000 (manufactured by Sigma-Aldrich Co. LLC) used in production of a silica monolith pellet was changed to 8.7 g. A silica monolith adsorbent was produced in the same manner as in Production Example 14 by using the obtained silica monolith pellet.

[Production Example 19]

A silica monolith pellet was produced in the same manner as in Production Example 1 except that the amount of polyethylene glycol 10000 (manufactured by Sigma-Aldrich Co. LLC) used in production of a silica monolith pellet was changed to 9.5 g. A silica monolith adsorbent was produced in the same manner as in Production Example 14 by using the obtained silica monolith pellet.

[Production Example 20]

A silica monolith pellet was produced in the same manner as in Production Example 1 except that heating and refluxing with 1.5 mol/L urea water was performed in production of a silica monolith pellet for 12 hours, instead of heating and refluxing with 3 mol/L urea water for 24 hours. A silica monolith adsorbent was produced in the same manner as in Production Example 14 by using the obtained silica monolith pellet.

[Production Example 21]

A silica monolith pellet was produced in the same manner as in Production Example 1 except that heating and refluxing with 1.5 mol/L urea water was performed in production of a silica monolith pellet for 4 hours, instead of heating and refluxing with 3 mol/L urea water for 24 hours. A silica monolith adsorbent was produced in the same manner as in Production Example 14 by using the obtained silica monolith pellet.

The amount of the nitrogen atom-containing group ($-NH_2$), the specific surface area, the most frequent pore diameter of mesopores, the total pore volume, the most frequent pore diameter of macropores and the porosity, with respect to each of the silica monolith adsorbents obtained in Production Examples 14 and 18 to 21, were measured in the same manner as in Production Example 1. The measurement results are shown in Table 6.

[Table 6]

|  |  | Production Example | | | | |
|---|---|---|---|---|---|---|
|  |  | 14 | 18 | 19 | 20 | 21 |
| Amount of Nitrogen Atom-Containing Group (mmol/g) | | 1.79 | 1.86 | 2.00 | 1.92 | 2.07 |
| Analysis by BET Method | Specific Surface Area ($m^2$/g) | 147.0 | 154.0 | 146.0 | 160.1 | 180.7 |
| Analysis by BIH Method | Most Frequent Pore Diameter of Mesopores (nm) | 21.1 | 19.2 | 17.6 | 18.9 | 13.6 |
| Analysis by Mercury Intrusion Method | Total Pore Volume (mL) | 2.36 | 2.29 | 2.29 | 2.28 | 2.16 |
|  | Most Frequent Pore Diameter of Macropores ($\mu$m) | 1.13 | 2.14 | 0.88 | 1.60 | 0.92 |
|  | Porosity (%) | 77.3 | 78.6 | 77.9 | 76.8 | 77.9 |
| Ratio of Pore Diameter of Macropores to Pore Diameter of Mesopores | | 53.6 | 111.5 | 50.0 | 84.7 | 67.7 |

[Test Example 3] Metal adsorption test by immersion in solution

The metal adsorption test was performed with respect to each of the silica monolith adsorbents obtained in Production Examples 14 and 18 to 21, in the same manner as in Test Example 2A. The platinum adsorption rate, the palladium adsorption rate and the rhodium adsorption rate are shown in Table 7. In Table 7, "> 95" indicates that the adsorption rate exceeded 95% corresponding to an analysis guaranteed value.

[Table 7]

|  | Production Example | | | | |
|---|---|---|---|---|---|
|  | 14 | 18 | 19 | 20 | 21 |
| Amount of Nitrogen Atom-Containing Group (mmol/g) | 1.79 | 1.86 | 2.00 | 1.92 | 2.07 |
| Platinum Adsorption Rate (%) | >95 | >95 | >95 | >95 | >95 |
| Palladium Adsorption Rate (%) | >95 | >95 | >95 | >95 | >95 |
| Rhodium Adsorption Rate (%) | >95 | >95 | >95 | >95 | >95 |

[Test Example 4] Metal adsorption test with flow-through of solution

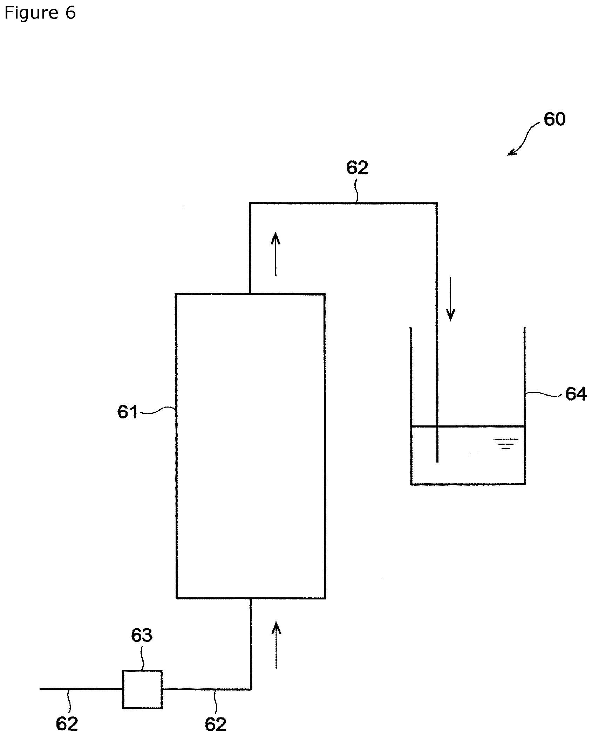

A flow-through adsorbing apparatus illustrated in Figure 6 was produced by packing 3.0 g of the silica pellet adsorbent having an average diameter of 4.6 mm, obtained in each of Production Examples 14, 18, 19 and 21, in a stainless column (diameter 20 mm, length 50 mm), and connecting the column to a liquid feeding pump via a stainless pipe.
In Figure 6, symbol 60 represents a flow-through adsorbing apparatus, symbol 61 represents a stainless column, symbol 62 represents a stainless pipe, symbol 63 represents a liquid feeding pump, symbol 64 represents a recovering container, and each arrow indicates a flow direction of a liquid.
After a flow channel was filled with water by feeding pure water at a flow rate of 5 mL/min from the liquid feeding pump for 2 minutes, an aqueous solution containing 10 ppm of each of platinum nitrate, palladium nitrate and rhodium nitrate was fed at a flow rate of 0.5 mL/min. The aqueous solution was collected in the container in each passing of 100 mL thereof through the column, from 10 minutes after the start of the feeding. This collecting operation was repeated ten times. The content of each metal in the aqueous solution collected in such each passing of 100 mL of the aqueous solution was analyzed with an ICP optical emission spectrometer (PS3520 UVDD manufactured by Hitachi, Ltd.). The platinum adsorption rate, the palladium adsorption rate and the rhodium adsorption rate were calculated in the same manner as in Test Example 2A. The results are shown in Tables 8A and B. In Table 8A and Table 8B, "> 95" indicates that the adsorption rate exceeded 95% corresponding to an analysis guaranteed value.

[Table 8A]

| Number of Collections | Production Example 14 | | | Production Example 18 | | |
|---|---|---|---|---|---|---|
| | Platinum Adsorption Rate (%) | Palladium Adsorption Rate (%) | Rhodium Adsorption Rate (%) | Platinum Adsorption Rate (%) | Palladium Adsorption Rate (%) | Rhodium Adsorption Rate (%) |
| 1 | 95 | >95 | 87 | 95 | >95 | >95 |
| 2 | 93 | >95 | 88 | 94 | >95 | 94 |
| 3 | 93 | >95 | 93 | 94 | >95 | >95 |
| 4 | 94 | >95 | >95 | 93 | >95 | 94 |
| 5 | 93 | >95 | >95 | 94 | >95 | >95 |
| 6 | >95 | >95 | >95 | 95 | >95 | >95 |
| 7 | >95 | >95 | >95 | 94 | >95 | >95 |
| 8 | >95 | >95 | >95 | >95 | >95 | >95 |
| 9 | >95 | >95 | >95 | >95 | >95 | >95 |
| 10 | >95 | >95 | 88 | >95 | >95 | >95 |

[Table 8B]

| Number of Collections | Production Example 19 | | | Production Example 21 | | |
|---|---|---|---|---|---|---|
| | Platinum Adsorption Rate (%) | Palladium Adsorption Rate (%) | Rhodium Adsorption Rate (%) | Platinum Adsorption Rate (%) | Palladium Adsorption Rate (%) | Rhodium Adsorption Rate (%) |
| 1 | 94 | 91 | 87 | >95 | 95 | >95 |
| 2 | 93 | 91 | 88 | >95 | 93 | 94 |
| 3 | 93 | 91 | 89 | 95 | >95 | >95 |
| 4 | 93 | 93 | 94 | 95 | >95 | 94 |
| 5 | 93 | 94 | 94 | 95 | >95 | >95 |
| 6 | 95 | >95 | >95 | 95 | >95 | >95 |
| 7 | >95 | >95 | >95 | 93 | >95 | >95 |
| 8 | >95 | >95 | 95 | 95 | >95 | >95 |
| 9 | >95 | >95 | 92 | 95 | >95 | >95 |
| 10 | 95 | >95 | 87 | >95 | >95 | >95 |

[Production Example 22]

(1) Production of silica monolith

To a 150-mL reaction container were added 8.67 g of polyethylene glycol 10000 (manufactured by Sigma-Aldrich Co. LLC), 7.80 g of urea and 86.7 g of an aqueous 6.06% by mass acetic acid solution, and stirred at room temperature for 10 minutes. The reaction container was placed in an ice bath, and a reaction solution was cooled under stirring for 15 minutes. To the cooled reaction solution was added 44.7 g of tetramethoxysilane, and stirred for 30 minutes under cooling in the ice bath. A mold for forming a cylindrical silica monolith pellet having an average diameter of 4.6 mm was added to the reaction container, and the reaction solution was warmed in a warm bath at 30°C and then left to still stand overnight in an incubator at 30°C, to thereby produce a polysiloxane gel.
Next, the obtained polysiloxane gel was added to another reaction container in which 30 mL of 3 mol/L urea water was placed, and heated and refluxed for 12 hours. After completion of the reaction, the obtained polysiloxane gel was washed with water, and dried in a drier set at 60°C for 12 hours. After the drying, the polysiloxane gel was fired at 600°C for 5 hours under an air atmosphere, and thus a cylindrical silica monolith pellet having an average diameter of 4.6 mm was obtained. The obtained silica monolith pellet was cut and adjusted to a length of 7.4 mm, and thus a silica monolith pellet having an aspect ratio of 1.6 was produced.

(2) Measurement of specific surface area and most frequent pore diameter of mesopores

The specific surface area and the most frequent pore diameter of mesopores were measured in the same manner as in Production Example 1. The measurement results are shown in Table 9A.

(3) Measurement of total pore volume, most frequent pore diameter of macropores, and porosity

The total pore volume, the most frequent pore diameter of macropores, and the porosity were measured in the same manner as in Production Example 1. The measurement results are shown in Table 9A.

(4) Production of silica monolith adsorbent

To a reaction container was added 5.0 g of the obtained silica monolith, 35 mL of pure water and 3.73 g of 3-aminopropyltrimethoxysilane were added thereto, and then heated and refluxed at 100°C for 4 hours. The silica monolith was separated from the solution by filtration, washed with 500 mL of pure water, and dried, to thereby obtain 6.44 g of a silica monolith adsorbent.

(5) Measurement of amount of nitrogen atom-containing group

The amount of the nitrogen atom-containing group ($-NH_2$) contained in the silica monolith adsorbent was measured with an oxygen/nitrogen/hydrogen analyzer (ONH836 manufactured by LECO Japan Corporation). The measurement results are shown in Table 9A.

[Production Example 23]

Production of silica monolith, measurements of the specific surface area, the most frequent pore diameter of mesopores, the total pore volume, the most frequent pore diameter of macropores, and the porosity, production of a silica monolith adsorbent, and measurement of the amount of a nitrogen atom-containing group ($-NH_2$) were performed in the same manner as in Production Example 22 except that the amount of 3-aminopropyltrimethoxysilane used in production of a silica monolith adsorbent was changed to 5.97 g. The measurement results are shown in Table 9A.

[Production Example 24]

Production of silica monolith, measurements of the specific surface area, the most frequent pore diameter of mesopores, the total pore volume, the most frequent pore diameter of macropores, and the porosity, production of a silica monolith adsorbent, and measurement of the amount of nitrogen atom-containing groups ($-NH_2$ and $-NH-$) were performed in the same manner as in Production Example 22 except that 4.63 g of 3-(2-aminoethylamino)propyltrimethoxysilane was used instead of 3.73 g of 3-aminopropyltrimethoxysilane, as a silane coupling agent in production of a silica monolith adsorbent. The measurement results are shown in Table 9A.

[Production Example 25]

Production of silica monolith, measurements of the specific surface area, the most frequent pore diameter of mesopores, the total pore volume, the most frequent pore diameter of macropores, and the porosity, production of a silica monolith adsorbent, and measurement of the amount of nitrogen atom-containing groups ($-NH_2$ and $-NH-$) were performed in the same manner as in Production Example 22 except that 5.52 g of 3-[2-(2-aminoethylamino)ethylamino]propyltrimethoxysilane was used instead of 3.73 g of 3-aminopropyltrimethoxysilane, as a silane coupling agent in production of a silica monolith adsorbent. The measurement results are shown in Table 9A.

[Production Example 26]

Production of silica monolith, measurements of the specific surface area, the most frequent pore diameter of mesopores, the total pore volume, the most frequent pore diameter of macropores, and the porosity, and measurement of the amount of nitrogen atom-containing groups (-NH$_2$, -NH- and -N<) were performed in the same manner as in Production Example 22 except that a silica monolith adsorbent was produced as follows. The measurement results are shown in Table 9A.

A silica monolith adsorbent was produced in Production Example 26, as follows. To a reaction container was added 5.0 g of silica monolith, 20 mL of an aqueous 0.1% acetic acid solution, 15 mL of ethanol and 4.92 g of 3-glycidyloxypropyltrimethoxysilane were added thereto, and then heated and refluxed at 100°C for 4 hours. The silica monolith was separated from the solution by filtration, washed with 500 mL of pure water, and dried. The total amount of the obtained silica monolith was added into the reaction container, and 3.33 g of polyethyleneimine (weight average molecular weight: 600) and 35 mL of pure water were added thereto, and heated at 80°C for 4 hours. The silica monolith was separated from the solution by filtration, washed with 500 mL of pure water, and dried, to thereby obtain 7.35 g of a silica monolith adsorbent.

[Production Example 27]

Production of silica monolith, measurements of the specific surface area, the most frequent pore diameter of mesopores, the total pore volume, the most frequent pore diameter of macropores and the porosity, and measurement of the amount of nitrogen atom-containing groups (-NH$_2$ and -NH-) were performed in the same manner as in Production Example 24 except that the amount of polyethylene glycol 10000 (manufactured by Sigma-Aldrich Co. LLC) used in production of silica monolith was changed to 8.25 g. The measurement results are shown in Table 9A.

[Production Example 28]

Production of silica monolith, measurements of the specific surface area, the most frequent pore diameter of mesopores, the total pore volume, the most frequent pore diameter of macropores and the porosity, and measurement of the amount of nitrogen atom-containing groups (-NH$_2$ and -NH-) were performed in the same manner as in Production Example 24 except that the amount of polyethylene glycol 10000 (manufactured by Sigma-Aldrich Co. LLC) used in production of silica monolith was changed to 9.08 g. The measurement results are shown in Table 9B.

[Production Example 29]

Production of silica monolith, measurements of the specific surface area, the most frequent pore diameter of mesopores, the total pore volume, the most frequent pore diameter of macropores and the porosity, and measurement of the amount of nitrogen atom-containing groups (-NH$_2$ and -NH-) were performed in the same manner as in Production Example 24 except that the heating and refluxing time in 3 mol/L urea water in production of silica monolith was changed to 5 hours. The measurement results are shown in Table 9B.

[Production Example 30]

Production of silica monolith, measurements of the specific surface area, the most frequent pore diameter of mesopores, the total pore volume, the most frequent pore diameter of macropores and the porosity, and measurement of the amount of nitrogen atom-containing groups (-NH$_2$ and -NH-) were performed in the same manner as in Production Example 24 except that the heating and refluxing time in 3 mol/L urea water in production of silica monolith was changed to 24 hours. The measurement results are shown in Table 9B.

[Test Example 5A] Metal adsorption test by immersion in solution

In 50 mL of an aqueous solution (containing 10 ppm of each metal element of Au, Ir, Os, Pd, Pt, Rh, and Ru) obtained by diluting TraceCERT Transition metal mix 3 for ICP solution (manufactured by Sigma-Aldrich Co. LLC) 10-fold with pure water was immersed 2.5 g of each of the silica monolith adsorbents obtained in Production Examples 22 to 30, and left to still stand at room temperature for 24 hours. After completion of the reaction, such each silica monolith adsorbent was separated by filtration, and the amount of each metal element contained in the resulting filtrate was analyzed with an ICP optical emission spectrometer (PS3520 UVDD manufactured by Hitachi, Ltd.). The percentage of the amount of each metal element adsorbed by the silica monolith adsorbent relative to the amount of each metal element originally contained in the aqueous solution (hereinafter, referred to as "adsorption rate") was calculated with respect to each metal element. The total adsorption rate (%) of all the metal elements is shown in Table 9A and 9B.

[Test Example 5B] Metal adsorption test by immersion in solution

Each of the silica monolith adsorbents obtained in Production Examples 22 to 30 was pulverized by a mortar so that the particle size was 300 $\mu$m or more and 1000 $\mu$m or less. In 30 mL of an aqueous solution (containing 10 ppm of each metal element of Au, Ir, Os, Pd, Pt, Rh, and Ru) obtained by diluting TraceCERT Transition metal mix 3 for ICP solution (manufactured by Sigma-Aldrich Co. LLC) 10-fold with pure water was immersed 300 mg of the pulverized adsorbent, and stirred at 25°C for 30 minutes. After completion of the reaction, such each silica monolith adsorbent was separated by filtration, and the amount of each metal element contained in the resulting filtrate was analyzed with an ICP optical emission spectrometer (PS3520 UVDD manufactured by Hitachi, Ltd.). The percentage of the amount of each metal element adsorbed by such each silica monolith adsorbent relative to the amount of each metal element originally contained in the aqueous solution (hereinafter, referred to as "adsorption rate") was calculated with respect to each metal element. The total adsorption rate (%) of all the metal elements is shown in Table 9A and 9B.

[Test Example 5C] Metal adsorption test by immersion in solution

Each of the silica monolith adsorbents obtained in Production Examples 22 to 30 was pulverized by a mortar so that the particle size was 38 $\mu$m or more and 75 $\mu$m or less. In 30 mL of an aqueous solution (containing 50 ppm of Au) obtained by diluting a gold standard stock solution (containing 1000 ppm of Au) (manufactured by Kanto Kagaku) 20-fold with pure water was immersed 30 mg of the pulverized adsorbent, and stirred at 25°C for 5 minutes or 15 minutes. After completion of the reaction, such each silica monolith adsorbent was separated by filtration, the amount of a gold element contained in the resulting filtrate was analyzed with an ICP optical emission spectrometer (PS3520 UVDD manufactured by Hitachi, Ltd.), and the amount of an adsorbed gold element was calculated. The obtained adsorption amount (mg) of the gold element was divided by the adsorption time (5 minutes or 15 minutes), and the adsorption speed (mg/min) of the gold element was calculated. The calculated adsorption speed is shown in Table 9A and 9B.

[Comparative Example 1]

Production of silica monolith, measurements of the specific surface area, the most frequent pore diameter of mesopores, the total pore volume, the most frequent pore diameter of macropores, and the porosity, and measurement of the amount of a nitrogen atom-containing group (-NH$_2$) were performed in the same manner as in Production Example 22 except that the amount of 3-aminopropyltrimethoxysilane used in production of a silica monolith adsorbent was changed to 0.75 g. The measurement results are shown in Table 9B.
The silica monolith adsorbent obtained in Comparative Example 1 was subjected to the metal adsorption test in the same manner as in Test Examples 5A to 5C. The results are shown in Table 9B.

[Comparative Example 2]

Production of silica monolith, measurements of the specific surface area, the most frequent pore diameter of mesopores, the total pore volume, the most frequent pore diameter of macropores, and the porosity, and measurement of the amount of a nitrogen atom-containing group (-NH$_2$) were performed in the same manner as in Production Example 22 except that the amount of 3-aminopropyltrimethoxysilane used in production of a silica monolith adsorbent was changed to 1.49 g. The measurement results are shown in Table 9B.
The silica monolith adsorbent obtained in Comparative Example 2 was subjected to the metal adsorption test in the same manner as in Test Examples 5A to 5C. The results are shown in Table 9B.

[Comparative Example 3]

Production of silica monolith, measurements of the specific surface area, the most frequent pore diameter of mesopores, the total pore volume, the most frequent pore diameter of macropores, and the porosity, and measurement of the amount of nitrogen atom-containing groups (-NH$_2$, -NH- and -N<) were performed in the same manner as in Production Example 26 except that the heating temperature in the presence of polyethyleneimine in production of a silica monolith adsorbent was changed to 100°C. The measurement results are shown in Table 9B.
The silica monolith adsorbent obtained in Comparative Example 3 was subjected to the metal adsorption test in the same manner as in Test Examples 5A to 5C. The results are shown in Table 9B.

[Comparative Example 4]

The same metal adsorption test was performed in the same manner as in Test Examples 5A to 5C except that commercially available amine-modified silica, 3-Aminopropyl Silica Gel (manufactured by Tokyo Chemical Industry Co., Ltd.) was used instead of the silica monolith adsorbent. The results are shown in Table 9C.

[Comparative Example 5]

The same metal adsorption test was performed in the same manner as in Test Examples 5A to 5C except that commercially available amine-modified silica, Wakogel 50 NH2 (manufactured by FUJIFILM Wako Pure Chemical Corporation) was used instead of the silica monolith adsorbent. The results are shown in Table 9C.

[Comparative Example 6]

The same metal adsorption test was performed in the same manner as in Test Examples 5A to 5C except that commercially available amine-modified silica, R-Cat-Sil AP (manufactured by Kanto Kagaku) was used instead of the silica monolith adsorbent. The results are shown in Table 9C.

[Comparative Example 7]

The same metal adsorption test was performed in the same manner as in Test Examples 5A to 5C except that an ion exchange resin (Aminomethyl)polystyrene as a commercially available product (manufactured by Sigma-Aldrich Co. LLC) was used instead of the silica monolith adsorbent. The results are shown in Table 9C.

[Table 9A]

| | | Production Example | | | | | |
|---|---|---|---|---|---|---|---|
| | | 22 | 23 | 24 | 25 | 26 | 27 |
| Before Surface Modification | Specific Surface Area ($m^2$/g) | 332.7 | 332.7 | 332.7 | 332.7 | 332.7 | 338.0 |
| | Most Frequent Pore Diameter of Mesopores (nm) | 19 | 19 | 19 | 19 | 19 | 19 |
| | Total Pore Volume (mL) | 3.4 | 3.4 | 3.4 | 3.4 | 3.4 | 3.0 |
| | Most Frequent Pore Diameter of Macropores ($\mu$m) | 1284 | 1284 | 1284 | 1284 | 1284 | 3499 |
| | Porosity (%) | 82 | 82 | 82 | 82 | 82 | 78 |
| | Ratio of Pore Diameter of Macropores to Pore Diameter of Mesopores | 67 | 67 | 67 | 67 | 67 | 182 |
| After Surface Modification | Amount of Nitrogen Atom-Containing Group (mmol/g) | 2.0 | 2.5 | 3.0 | 3.6 | 4.3 | 2.7 |
| | Adsorption Rate (Test Example 5A) (%) | 88 | 90 | 89 | 91 | 69 | 92 |
| | Adsorption Rate (Test Example 5B) (%) | 67 | 74 | 78 | 84 | 75 | 77 |
| | Adsorption Speed (5 minutes) (mg/min) | 0.054 | 0.075 | 0.277 | 0.290 | 0.258 | 0.278 |
| | Adsorption Speed (15 minutes) (mg/min) | 0.032 | 0.043 | 0.094 | 0.096 | 0.086 | 0.096 |

[Table 9B]

| | | Production Example | | | Comparative Example | | |
|---|---|---|---|---|---|---|---|
| | | 28 | 29 | 30 | 1 | 2 | 3 |
| Before Surface Modification | Specific Surface Area (m²/g) | 384.0 | 367.6 | 249.7 | 332.7 | 332.7 | 332.7 |
| | Most Frequent Pore Diameter of Mesopores (nm) | 19 | 17 | 31 | 19 | 19 | 19 |
| | Total Pore Volume (mL) | 3.2 | 2.8 | 2.9 | 3.4 | 3.4 | 3.4 |
| | Most Frequent Pore Diameter of Macropores (μm) | 1046 | 455 | 609 | 1284 | 1284 | 1284 |
| | Porosity (%) | 81 | 80 | 79 | 82 | 82 | 82 |
| | Ratio of Pore Diameter of Macropores to Pore Diameter of Mesopores | 55 | 27 | 20 | 67 | 67 | 67 |
| After Surface Modification | Amount of Nitrogen Atom-Containing Group (mmol/g) | 3.1 | 3.4 | 3.1 | 0.9 | 1.4 | 5.5 |
| | Adsorption Rate (Test Example 5A) (%) | 91 | 91 | 85 | 56 | 79 | 36 |
| | Adsorption Rate (Test Example 5B) (%) | 81 | 82 | 81 | 30 | 57 | 62 |
| | Adsorption Speed (5 minutes) (mg/min) | 0.282 | 0.287 | 0.284 | 0.013 | 0.015 | 0.228 |
| | Adsorption Speed (15 minutes) (mg/min) | 0.096 | 0.095 | 0.095 | 0.005 | 0.010 | 0.075 |

[Table 9C]

| | Comparative Example | | | |
|---|---|---|---|---|
| | 4 | 5 | 6 | 7 |
| Amount of Nitrogen Atom-Containing Group (mmol/g) | 1.0 | 1.1 | 2.0 | 1.2 |
| Adsorption Rate (Test Example 5A) (%) | 54 | 79 | as | 10 |
| Adsorption Rate (Test Example 5B) (%) | 39 | 58 | 64 | 0 |
| Adsorption Speed (5 minutes) (mg/min) | 0.004 | 0.021 | 0.035 | 0.000 |
| Adsorption Speed (15 minutes) (mg/min) | 0.003 | 0.010 | 0.017 | 0.000 |

The adsorption speed having high performance is placed ahead of the adsorption rate in the present invention from the viewpoint that the recovery speed is of importance in practical use of the adsorbent. It was clear from Table 9A, Table 9B and Table 9C that the adsorption rates in Production Examples 22 to 30 were equivalent to or more than those in Comparative Examples 1, 2 and 4 to 7 and the adsorption speeds in Production Examples 22 to 30 exceeded those in Comparative Examples 1, 2 and 4 to 7. It was also found that Comparative Example 3 in which the amount of nitrogen atom-containing groups was too large, although exhibited the adsorption rate (Test Example 5B) and the adsorption speed each comparable with those in Production Examples 22 to 30, exhibited a lower adsorption rate (Test Example 5A) than those in Production Examples 22 to 30. The reason for this was considered because excess amount of functional group caused an increase in hydrophobicity of silica monolith, hardly allowed a metal-containing solution to penetrate into a pore, and did not enable the functional group introduced to be effectively utilized, so that there was no suitability for practical use.

Description of Symbols

1    columnar body
2    ceramic skeleton
3    macropore

4       mesopore
60      flow-through adsorbing apparatus
61      stainless column
62      stainless pipe
63      liquid feeding pump
64      recovering container

**Claims**

1.  A porous body having a co-continuous structure formed by: a ceramic skeleton comprising mesopores; and macropores,

    wherein a surface of the ceramic skeleton is modified by a metal- and/or metal ion-adsorbable nitrogen atom-containing group,
    wherein the nitrogen atom-containing group is at least one selected from a primary amino group, a secondary amino group, a tertiary amino group, a quaternary ammonium group, an imino group, a nitrilo group and a nitrogen atom-containing heterocyclic group, and
    wherein an amount of the nitrogen atom-containing group contained in the porous body is 1.5 mmol/g or more and 5.4 mmol/g or less.

2.  The porous body according to claim 1,

    wherein the nitrogen atom-containing group is contained in an amine compound,
    wherein the amine compound is fixed to a surface of the ceramic skeleton, so that the surface of the ceramic skeleton is modified by the nitrogen atom-containing group, and
    wherein the amine compound is at least one selected from monoamine, diamine, triamine and polyamine.

3.  The porous body according to claim 1 or 2, wherein a most frequent pore diameter of the macropores before modification by the nitrogen atom-containing group is 0.20 $\mu$m or more and 4.0 $\mu$m or less, and a most frequent pore diameter of the mesopores before modification by the nitrogen atom-containing group is 2.0 nm or more and 50 nm or less.

4.  The porous body according to any one of claims 1 to 3, wherein a ratio of a most frequent pore diameter of the macropores before modification by the nitrogen atom-containing group to a most frequent pore diameter of the mesopores before modification by the nitrogen atom-containing group is 15 or more and 200 or less.

5.  The porous body according to any one of claims 1 to 4, wherein the ceramic skeleton contains an element selected from silicon, aluminum, tin, cerium, titanium and zirconium.

6.  The porous body according to any one of claims 1 to 5, wherein the metal is a transition metal, and the metal ion is a transition metal ion.

7.  An adsorbent comprising the porous body according to any one of claims 1 to 6.

8.  A method of removing a metal and/or a metal ion from a solution containing the metal and/or the metal ion, the method comprising a step of contacting the solution and the adsorbent according to claim 7.

Figure 1

Figure 2A

Figure 2B

Figure 3

Figure 4A

Figure 4B

Figure 5

10 μm

Figure 6

## INTERNATIONAL SEARCH REPORT

| | International application No. |
|---|---|
| | **PCT/JP2022/003432** |

### A. CLASSIFICATION OF SUBJECT MATTER

***C01B 33/157***(2006.01)i; ***B01J 20/22***(2006.01)i; ***B01J 20/28***(2006.01)i; ***B01J 20/34***(2006.01)i; ***C01B 33/152***(2006.01)i; ***C02F 1/28***(2006.01)i

FI:    C01B33/157; B01J20/28 Z; B01J20/34 G; C02F1/28 B; C01B33/152 A; B01J20/22 B

According to International Patent Classification (IPC) or to both national classification and IPC

### B. FIELDS SEARCHED

Minimum documentation searched (classification system followed by classification symbols)

C01B33/157; B01J20/22; B01J20/28; B01J20/34; C01B33/152; C02F1/28

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2017/002871 A1 (SNG INC.) 05 January 2017 (2017-01-05)<br>claim 8, paragraph [0058] | 1-8 |
| A | WO 2017/026388 A1 (SNG INC.) 16 February 2017 (2017-02-16)<br>entire text | 1-8 |
| A | JP 2014-148456 A (KYOTO UNIVERSITY) 21 August 2014 (2014-08-21)<br>entire text | 1-8 |
| A | JP 2018-134624 A (KYOTO MONOTECH CO., LTD.) 30 August 2018 (2018-08-30)<br>entire text | 1-8 |
| A | JP 3145505 U (KYOTO MONOTECH CO., LTD.) 09 October 2008 (2008-10-09)<br>entire text | 1-8 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 March 2022** | **05 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/003432**

| Patent document cited in search report | | | Publication date (day/month/year) | Patent family member(s) | | Publication date (day/month/year) |
|---|---|---|---|---|---|---|
| WO | 2017/002871 | A1 | 05 January 2017 | US 2018/0185821 A1 claim 8, paragraph [0111] EP 3318322 A1 CN 107708851 A | | |
| WO | 2017/026388 | A1 | 16 February 2017 | US 2019/0008134 A1 entire text EP 3336156 A1 CN 107922818 A KR 10-2018-0039689 A | | |
| JP | 2014-148456 | A | 21 August 2014 | (Family: none) | | |
| JP | 2018-134624 | A | 30 August 2018 | (Family: none) | | |
| JP | 3145505 | U | 09 October 2008 | (Family: none) | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017002871 A